# EUROPEAN PATENT APPLICATION

(11) **EP 4 808 024 A1**
(43) Date of publication of application: **16.09.2026**
(21) Application number: 24896325.8
(22) Date of filing: 19.11.2024
(51) Int. Cl.: H04L 1/08, H04W 72/04

(54) **COMMUNICATION METHOD AND COMMUNICATION APPARATUS**

(30) Priority: 27.11.2023 CN 202311601838
(71) Applicant: Huawei Technologies Co., Ltd., Shenzhen, Guangdong 518129 (CN)
(72) Inventor: ZHAO, Feiran, Shenzhen, Guangdong 518129 (CN); CHEN, Ying, Shenzhen, Guangdong 518129 (CN); ZHANG, Jiayin, Shenzhen, Guangdong 518129 (CN); QIAO, Yunfei, Shenzhen, Guangdong 518129 (CN)
(74) Representative: Isarpatent
(86) International application number: PCT/CN2024/132846
(87) International publication number: WO 2025/113234

(57) **Abstract**

Embodiments of this application provide a communication method and a communication apparatus, to improve a PDCCH coverage capability. The method includes: receiving first information, where the first information indicates configuration information of a physical downlink control channel PDCCH; and when a condition is satisfied, monitoring the PDCCH on a first PDCCH transmission resource based on the first information, where the first PDCCH transmission resource includes a second PDCCH transmission resource used for enhancing the PDCCH, and enhancing the PDCCH includes repeating transmission of the PDCCH and/or increasing an PDCCH aggregation level.

## Description

This application claims priority to Chinese Patent Application No. 202311601838.1, filed with the China National Intellectual Property Administration on November 27, 2023 and entitled "COMMUNICATION METHOD AND COMMUNICATION APPARATUS", which is incorporated herein by reference in its entirety.

### TECHNICAL FIELD

This application relates to the field of communication technologies, and in particular, to a communication method and a communication apparatus.

### BACKGROUND

Non-terrestrial network (non-terrestrial network, NTN) communication, especially satellite communication, is included in discussion of relevant 3GPP specifications due to features such as wide coverage and a strong disaster resistance capability. An NTN can cover a specific application scenario together with a terrestrial network and serve as an enhancement means for terrestrial network coverage, can independently serve isolated islands, remote areas (for example, poles and oceans), aerospace devices, and the like, and can also directly provide broadcast or multicast services for network edges or user equipments, so that scalability of a 5G network is significantly improved. As one of important implementation forms of the NTN, satellite communication is an important constituent part of a space-ground integrated network.

A downlink transmission process includes downlink control information transmission and downlink data transmission. A downlink control channel (physical downlink control channel, PDCCH) carries control information used for scheduling a downlink data shared channel. Therefore, reliability of the downlink data transmission depends on reliability of the PDCCH.

The NTN has a long communication distance and a large communication link loss. Therefore, a link budget may not satisfy a decoding threshold.

### SUMMARY

This application provides a communication method and a communication apparatus, to enhance a PDCCH, and improve performance and a coverage capability of the PDCCH.

A first aspect provides a communication method. The method is performed by a terminal device, the method is performed by some components (for example, a processor, a chip, or a chip system) in a terminal device, or the method may be implemented by using a logic module or software that can implement all or some functions of a terminal device.

In the first aspect and possible implementations of the first aspect, an example in which the communication method is performed by the terminal device is used for description. The method includes: First information is received, where the first information indicates configuration information of a PDCCH, in other words, the first information indicates a time-frequency resource for transmitting the PDCCH. When a condition is satisfied, the PDCCH is monitored on a first PDCCH transmission resource based on the first information. In other words, the terminal device monitors repetitions of the PDCCH on the first PDCCH transmission resource, and/or performs PDCCH blind detection at a higher aggregation level, to improve a success rate of decoding the PDCCH by the terminal device. The first PDCCH transmission resource includes a second PDCCH transmission resource used for enhancing a PDCCH. Enhancing the PDCCH includes repeating transmission of the PDCCH and/or increasing an PDCCH aggregation level. The second PDCCH transmission resource may include a PDCCH resource extensively configured by a network device. The second PDCCH transmission resource may further include an idle PDCCH transmission resource. It should be noted that, the first PDCCH transmission resource includes the second PDCCH transmission resource used for enhancing the PDCCH. This does not mean that the PDCCH is enhanced only on the second PDCCH transmission resource, but means that the network device adds a PDCCH transmission resource for the PDCCH to enhance the PDCCH, so that the PDCCH can be transmitted on the first PDCCH transmission resource in a form of enhancing the PDCCH. The added PDCCH transmission resource is relative to a PDCCH transmission resource actually used for transmission of the PDCCH when the PDCCH is not to be enhanced. When the condition is satisfied, transmission of the PDCCH is repeated or the PDCCH aggregation level is increased to enhance the PDCCH, so as to improve performance, coverage, and reliability of the PDCCH.

In a possible implementation, that the condition is satisfied includes: at least one of the following conditions is satisfied: second information is received; a corresponding frequency band for receiving the first information is a non-terrestrial network frequency band; and third information is sent. The second information indicates to enhance the PDCCH. The second information may be sent by the network device after the network device determines to enhance the PDCCH, to indicate the terminal device to monitor repetitions of transmission of the PDCCH on a first PDCCH transmission resource, and/or perform PDCCH blind detection at a higher aggregation level. The corresponding frequency band for receiving the first information is a non-terrestrial network frequency band, in other words, the terminal device communicates with the network device in the non-terrestrial network frequency band. The third information indicates to enhance the PDCCH, or the third information is used for requesting to enhance the PDCCH from the network device. Alternatively, the third information is used for reporting a terminal device capability to the network device, and the terminal device capability includes a PDCCH enhancement processing capability, to be specific, the terminal device has a capability of determining the first PDCCH transmission resource, monitoring a repetition of transmission of the PDCCH on the first PDCCH transmission resource, and/or perform PDCCH blind detection at a higher aggregation level. Therefore, if the PDCCH is enhanced when downlink performance is poor, a success rate of decoding the PDCCH by the terminal device can be improved, and downlink reliability can be improved.

In a possible implementation, the PDCCH is used for scheduling a system information block (system information block, SIB)1. To be specific, the transmission resource of the PDCCH is defined based on a control resource set (Control Resource Set, CORESET)0 and a Type (type)0-PDCCH common search space set. The method further includes: When the condition is satisfied, the first PDCCH transmission resource is determined based on the first information, where the second PDCCH transmission resource is a resource configured based on the CORESETO, and/or the second PDCCH transmission resource is a resource configured based on a Type0-PDCCH common search space set. In other words, the second PDCCH transmission resource is a resource extended by using the CORESETO. For example, when the condition is satisfied, the network device configures a CORESETO having more resources for the PDCCH. For example, the CORESETO includes more resources in frequency domain, and/or the CORESET includes more symbols in time domain. Alternatively, in a possible scenario, a resource size of the CORESETO is greater than a size of a PDCCH payload, in other words, a resource size occupied by the PDCCH payload is less than the resource size of the configured CORESETO, there is an idle resource in the PDCCH transmission resource, and the network device enhances the PDCCH by using the idle resource. Alternatively, the second PDCCH transmission resource is a resource extended by using the Type0-PDCCH common search space set. For example, when the condition is satisfied, the network device configures more Type0-PDCCH common search space sets for the PDCCH, to increase Type0-PDCCH monitoring occasions. Therefore, the network device may configure, for the PDCCH, a transmission resource used for enhancing the PDCCH, to improve a coverage capability and performance of the PDCCH.

In a possible implementation, the first information indicates that a synchronization signal block (synchronization signal block, SSB)/CORESET multiplexing pattern is 1. When the SSB/CORESET multiplexing pattern is 1, according to a new radio (new radio, NR) standard, the terminal device needs to monitor a Type0-PDCCH on Type0-PDCCH monitoring occasions in two slots in an even-numbered frame or an odd-numbered frame. The first PDCCH transmission resource includes a third PDCCH transmission resource, the third PDCCH transmission resource corresponds to a first Type0-PDCCH monitoring occasion, the second PDCCH transmission resource corresponds to a second Type0-PDCCH monitoring occasion, and the first Type0-PDCCH monitoring occasion is associated with the second Type0-PDCCH monitoring occasion. A first slot includes the first Type0-PDCCH monitoring occasion, and a second slot includes the second Type0-PDCCH monitoring occasion. The first slot and the second slot belong to a same radio frame. In other words, the network device enhances the PDCCH based on the Type0-PDCCH monitoring occasions in different slots in the same radio frame. Therefore, the PDCCH is enhanced on the configured PDCCH transmission resources, so that the resources can be effectively used, and a coverage capability and performance of the PDCCH can be improved. Alternatively, the first slot and the second slot respectively belong to two adjacent radio frames. In other words, the network device enhances the PDCCH based on the Type0-PDCCH monitoring occasions in the slots in the odd-numbered frame and the even-numbered frame. Alternatively, the first Type0-PDCCH monitoring occasion and the second Type0-PDCCH monitoring occasion are scheduled by different SSBs in repeated transmission. The different SSBs in repeated transmission are SSBs that schedule the same SIB1, and the different SSBs in repeated transmission correspond to a same SSB index. Therefore, a coverage capability and performance of the Type0-PDCCH are improved. Correspondingly, the terminal device monitors repetitions of transmission of the PDCCH on the associated Type0-PDCCH monitoring occasions, and/or performs PDCCH blind detection on the first PDCCH transmission resource at a higher aggregation level, to increase a success rate of decoding the PDCCH.

In a possible implementation, the first PDCCH transmission resource includes a third PDCCH transmission resource associated with the second PDCCH transmission resource, the third PDCCH transmission resource is a resource configured based on a first Type0-PDCCH common search space set, the second PDCCH transmission resource is a resource configured based on a second Type0-PDCCH common search space set, and the first Type0-PDCCH common search space set and the second Type0-PDCCH common search space set are located in a same slot. A configuration parameter of the Type0-PDCCH common search space set includes a number of search space sets per slot (number of search space sets per slot). More Type0-PDCCH common search space sets may be configured in one slot by using the parameter, to configure the transmission resources used for enhancing the PDCCH, so as to improve a coverage capability and performance of the PDCCH. Correspondingly, the terminal device associates the first Type0-PDCCH common search space set with the second Type0-PDCCH common search space set, monitors repetitions of transmission of the PDCCH on corresponding monitoring occasions, and/or perform PDCCH blind detection on the first PDCCH transmission resource at a higher aggregation level, to increase a success rate of decoding the PDCCH.

In a possible implementation, the first PDCCH transmission resource includes a third PDCCH transmission resource associated with the second PDCCH transmission resource, and the second PDCCH transmission resource and the third PDCCH transmission resource are resources configured based on the same CORESETO. In an implementation, the network device configures more resources on the CORESETO to configure the transmission resource used for enhancing the PDCCH, in other words, the network device configures the CORESETO having more resources. For example, in another implementation, the network device may not increase a resource size of the CORESETO, and the network device may enhance the PDCCH by using an idle resource, in other words, the resource size configured by using the CORESETO is greater than a resource size actually occupied by the PDCCH. The network device may use an unused idle resource, and add the idle resource to the first PDCCH transmission resource used for transmission of the PDCCH, to enhance the PDCCH on the first PDCCH transmission resource, so as to improve resource utilization and improve a coverage capability and performance of the PDCCH. Correspondingly, the terminal device associates the second PDCCH transmission resource with the third PDCCH transmission resource, monitors repetitions of the PDCCH on the second PDCCH transmission resource and the third PDCCH transmission resource, and/or performs PDCCH blind detection on the first PDCCH transmission resource at a higher aggregation level, to improve a success rate of decoding the PDCCH.

In a possible implementation, the first PDCCH transmission resource includes a third PDCCH transmission resource associated with the second PDCCH transmission resource, the second PDCCH transmission resource and the third PDCCH transmission resource are resources configured based on a same search space set, the third PDCCH transmission resource corresponds to a first PDCCH monitoring occasion, the second PDCCH transmission resource corresponds to a second PDCCH monitoring occasion, and the first PDCCH monitoring occasion and the second PDCCH monitoring occasion belong to a same slot. To be specific, the network device may configure N monitoring occasions in one slot based on one search space, and associate the N monitoring occasions. The network device repeats transmission of the PDCCH on a PDCCH transmission resource (namely, the first PDCCH transmission resource) corresponding to the N monitoring occasions, and/or transmits the PDCCH at a higher aggregation level, to improve a coverage capability and performance of the PDCCH. Correspondingly, the terminal device associates the N monitoring occasions, monitors repetitions of the PDCCH on the N monitoring occasions, and/or perform PDCCH blind detection on the first PDCCH transmission resource at a higher aggregation level, to improve a success rate of decoding the PDCCH. N is an integer greater than or equal to 2. Optionally, the search space set is a Type0A/0B/1/1A/2/2A/3 common search space set, or the search space set is a UE-specific search space set.

In a possible implementation, the first PDCCH transmission resource includes a third PDCCH transmission resource associated with the second PDCCH transmission resource, and the second PDCCH transmission resource and the third PDCCH transmission resource are resources in a PDCCH transmission resource that are configured based on a same CORESET and a same search space. In other words, the first PDCCH transmission resource is a resource configured based on one CORESET and one search space. The search space set may be a Type0/0A/0B/1/1A/2/2A/3 common search space set, or the search space set may be a user equipment (user equipment, UE)-specific search space set.

In a possible implementation, the network device may configure a CORESET having more resources to enhance the PDCCH. For example, the CORESET having more resources has more resource blocks in frequency domain, and/or has more symbols in time domain. The CORESET having more resources is relative to a CORESET configured when the PDCCH is not to be enhanced. Therefore, correspondingly, the terminal device associates the second PDCCH transmission resource with the third PDCCH transmission resource in the first PDCCH transmission resource, monitors repetitions of the PDCCH on the second PDCCH transmission resource and the third PDCCH transmission resource, and/or performs PDCCH blind detection on the first PDCCH transmission resource at a higher aggregation level, to improve a success rate of decoding the PDCCH.

In another possible implementation, the network device may enhance the PDCCH without configuring a CORESET having more resources, but when there is an idle resource in the PDCCH transmission resource, the network device enhances the PDCCH by using the idle resource. In other words, the first PDCCH transmission resource configured when the PDCCH is to be enhanced is the same as a fourth PDCCH transmission resource configured when the PDCCH is not to be enhanced. However, the fourth PDCCH transmission resource configured when the PDCCH is not to be enhanced is not actually all used for transmission of the PDCCH, and there is an idle resource. When the PDCCH is to be enhanced, the idle resource (the second PDCCH transmission resource) is used for transmission of the PDCCH. Correspondingly, the terminal device associates the second PDCCH transmission resource with the third PDCCH transmission resource in the first PDCCH transmission resource, monitors repetitions of the PDCCH on the second PDCCH transmission resource and the third PDCCH transmission resource, and/or performs PDCCH blind detection on the first PDCCH transmission resource at a higher aggregation level, to improve a success rate of decoding the PDCCH.

In a possible implementation, the first PDCCH transmission resource includes a third PDCCH transmission resource, the third PDCCH transmission resource is a resource configured based on a first CORESET and a first search space set, the second PDCCH transmission resource is a resource configured based on a second CORESET and a second search space set, the first CORESET is associated with the second CORESET, the first search space set is associated with the second search space set, and the first CORESET is different from the second CORESET. In other words, the network device may associate different CORESETs. Optionally, search space sets corresponding to different CORESETs may be further associated. Types of the associated search space sets may be the same or different. Optionally, when PDCCH candidate aggregation levels are different, or numbers of PDCCH candidates are different in the associated search space sets, a PDCCH candidate used for enhancing the PDCCH may be further associated. Therefore, configuration flexibility of the first PDCCH transmission resource can be improved.

A second aspect provides a communication method. The communication method may be performed by a network device. The network device is, for example, an access network device. The network device may be deployed on a satellite, or may be deployed on the ground. Alternatively, the communication method is performed by some components (for example, a processor, a chip, or a chip system) in a network device, or the communication method may be implemented by using a logical module or software (for example, a DU or an RU) that can implement all or some functions of a network device. The method includes: sending first information, where the first information indicates configuration information of a physical downlink control channel PDCCH; and when a condition is satisfied, sending the PDCCH on a first PDCCH transmission resource, where the first PDCCH transmission resource includes a second PDCCH transmission resource used for enhancing the PDCCH, and enhancing the PDCCH includes repeating transmission of the PDCCH and/or increasing an PDCCH aggregation level.

In a possible implementation, that the condition is satisfied includes: at least one of the following conditions is satisfied: an elevation angle of a beam used for sending the first information is less than a preset angle; the first information is sent in a non-terrestrial network frequency band; and third information is received. If the elevation angle of the beam used for sending the first information is less than the preset angle, it indicates that a terminal device is located in a coverage edge area of the network device, so that a coverage capability and performance of the PDCCH can be improved by enhancing the PDCCH, to improve a success rate of decoding the PDCCH by the terminal device. The first information is sent in the non-terrestrial network frequency band, in other words, the network device communicates with the terminal device in the NTN frequency band. Because a NTN is far away, downlink performance may be poor. Therefore, enhancing the PDCCH can improve the coverage capability and the performance of the PDCCH, and ensure downlink reliability. The third information may be sent by the terminal device. The third information indicates to enhance the PDCCH, the third information is used for requesting the network device to enhance the PDCCH, or the third information is used for reporting a capability of the terminal device to the network device, for example, a capability of supporting enhancing the PDCCH.

In a possible implementation, the PDCCH is used for scheduling a SIB1, and the second PDCCH transmission resource is a resource configured based on a CORESETO, and/or the second PDCCH transmission resource is a resource configured based on a Type0-PDCCH common search space set.

In a possible implementation, the first information indicates that an SSB/CORESET multiplexing pattern is 1, the first PDCCH transmission resource includes a third PDCCH transmission resource, the third PDCCH transmission resource corresponds to a first Type0-PDCCH monitoring occasion, the second PDCCH transmission resource corresponds to a second Type0-PDCCH monitoring occasion, and the first Type0-PDCCH monitoring occasion is associated with the second Type0-PDCCH monitoring occasion; and a first slot includes the first Type0-PDCCH monitoring occasion, a second slot includes the second Type0-PDCCH monitoring occasion, and the first slot and the second slot belong to a same radio frame, or the first slot and the second slot respectively belong to two adjacent radio frames; or the first Type0-PDCCH monitoring occasion and the second Type0-PDCCH monitoring occasion are scheduled by different SSBs in repeated transmission.

In a possible implementation, the first PDCCH transmission resource includes a third PDCCH transmission resource associated with the second PDCCH transmission resource, the third PDCCH transmission resource is a resource configured based on a first Type0-PDCCH common search space set, the second PDCCH transmission resource is a resource configured based on a second Type0-PDCCH common search space set, and the first Type0-PDCCH common search space set and the second Type0-PDCCH common search space set are located in a same slot.

In a possible implementation, the first PDCCH transmission resource includes a third PDCCH transmission resource associated with the second PDCCH transmission resource, and the second PDCCH transmission resource and the third PDCCH transmission resource are resources configured based on the same CORESETO.

In a possible implementation, the first PDCCH transmission resource includes a third PDCCH transmission resource associated with the second PDCCH transmission resource, the second PDCCH transmission resource and the third PDCCH transmission resource are resources configured based on a same search space set, the third PDCCH transmission resource corresponds to a first PDCCH monitoring occasion, the second PDCCH transmission resource corresponds to a second PDCCH monitoring occasion, and the first PDCCH monitoring occasion and the second PDCCH monitoring occasion belong to a same slot.

In a possible implementation, the first PDCCH transmission resource includes a third PDCCH transmission resource associated with the second PDCCH transmission resource, and the second PDCCH transmission resource and the third PDCCH transmission resource are resources in a PDCCH transmission resource that are configured based on a same CORESET and a same search space.

In a possible implementation, the search space set is a Type0/0A/0B/1/1A/2/2A/3 common search space set, or the search space set is a UE-specific search space set.

In a possible implementation, the first PDCCH transmission resource includes a third PDCCH transmission resource, the third PDCCH transmission resource is a resource configured based on a first CORESET and a first search space set, the second PDCCH transmission resource is a resource configured based on a second CORESET and a second search space set, the first CORESET is associated with the second CORESET, the first search space set is associated with the second search space set, and the first CORESET is different from the second CORESET.

According to a third aspect, an embodiment of this application provides a communication apparatus. The communication apparatus has a function of implementing a behavior in the method embodiment in the first aspect. For beneficial effects, refer to the descriptions of the first aspect. Details are not described herein again. The communication apparatus may be the terminal device in the first aspect, or the communication apparatus may be an apparatus, for example, a chip or a chip system, that can support the terminal device in the first aspect in implementing a function required by the method provided in the first aspect.

In a possible design, the communication apparatus includes a corresponding means (means) or module for performing the method in the first aspect. For example, the communication apparatus includes a processing unit (sometimes also referred to as a processing module) and/or a transceiver unit (sometimes also referred to as a transceiver module). These units (modules) may perform a corresponding function in the method example in the first aspect. For details, refer to the detailed descriptions in the method example. Details are not described herein again.

According to a fourth aspect, an embodiment of this application provides a communication apparatus. The communication apparatus has a function of implementing a behavior in the method embodiment in the second aspect. For beneficial effects, refer to the descriptions of the second aspect. Details are not described herein again. The communication apparatus may be the network device in the second aspect, or the communication apparatus may be an apparatus, for example, a chip or a chip system, that can support the network device in the second aspect in implementing a function required by the method provided in the second aspect.

In a possible design, the communication apparatus includes a corresponding means or module for performing the method in the second aspect. For example, the communication apparatus includes a processing unit (sometimes also referred to as a processing module) and/or a transceiver unit (sometimes also referred to as a transceiver module). These units (modules) may perform a corresponding function in the method example in the second aspect. For details, refer to the detailed descriptions in the method example. Details are not described herein again.

According to a fifth aspect, an embodiment of this application provides a communication apparatus. The communication apparatus may be the communication apparatus in the third aspect or the fourth aspect in the foregoing embodiment, or a chip or a chip system disposed in the communication apparatus in the third aspect or the fourth aspect. The communication apparatus includes a communication interface and a processor, and optionally, further includes a memory. The memory is configured to store a computer program, instructions, or data. The processor is coupled to the memory and the communication interface. When the processor reads the computer program, the instructions, or the data, the communication apparatus is caused to perform the method performed by the terminal device or the network device in the foregoing method embodiments.

According to a sixth aspect, an embodiment of this application provides a communication apparatus. The communication apparatus includes at least one processor, and optionally, further includes a memory, and the at least one processor is coupled to the memory. The at least one processor is configured to perform the method in the first aspect or the second aspect.

According to a seventh aspect, an embodiment of this application provides a chip system. The chip system includes a processor, and may further include a memory and/or a communication interface. The chip system is configured to implement the method in the first aspect or the second aspect. In a possible implementation, the chip system further includes a memory, configured to store program instructions and/or data. The chip system may include a chip, or may include a chip and another discrete component.

According to an eighth aspect, an embodiment of this application provides a communication system. The communication system includes a communication apparatus configured to perform the method in the first aspect and a communication apparatus configured to perform the method in the second aspect. The communication apparatus configured to perform the method according to the first aspect is, for example, the terminal device according to the first aspect, and the communication apparatus configured to perform the method according to the second aspect is, for example, the network device according to the second aspect. Optionally, the communication system may further include a location management device.

According to a ninth aspect, this application provides a computer-readable storage medium. The computer-readable storage medium stores a computer program. When the computer program is run, the method in either of the first aspect and the second aspect is implemented.

According to a tenth aspect, a computer program product is provided. The computer program product includes computer program code. When the computer program code is run, the method in either of the first aspect and the second aspect is performed.

### BRIEF DESCRIPTION OF DRAWINGS

FIG. 1 is a diagram of an architecture of a communication system 1000 to which an embodiment of this application is applied;
FIG. 2a is a diagram of an NTN network architecture according to this application;
FIG. 2b is a diagram of another NTN network architecture according to this application;
FIG. 2c is a diagram of another NTN network architecture according to this application;
FIG. 3 is a schematic flowchart of a communication method according to this application;
FIG. 4 is a diagram of a configuration of a first PDCCH resource according to this application;
FIG. 5 is a diagram of another configuration of a first PDCCH resource according to this application;
FIG. 6 is a diagram of another configuration of a first PDCCH resource according to this application;
FIG. 7 is a possible example block diagram of a communication apparatus according to this application;
FIG. 8 is a diagram of a structure of a communication apparatus according to this application;
FIG. 9 is a simplified diagram of a structure of a communication apparatus according to this application; and
FIG. 10 is a simplified diagram of a structure of a terminal device according to this application.

### DESCRIPTION OF EMBODIMENTS

The following clearly and completely describes the technical solutions in embodiments of this application with reference to the accompanying drawings in embodiments of this application.

In descriptions of this application, unless otherwise specified, "/" means "or". For example, A/B may indicate A or B. The term "and/or" in embodiments of this application describes only an association relationship for describing associated objects and represents that three relationships may exist. For example, A and/or B may represent the following three cases: Only A exists, both A and B exist, and only B exists. In addition, "at least one" means one or more, and "a plurality of" means two or more. Terms such as "first" and "second" do not limit a number and an execution sequence, and the terms such as "first" and "second" do not indicate a definite difference.

In this application, a word such as "example" or "for example" is used to represent giving an example, an illustration, or a description. Any embodiment or design scheme described as an "example" or "for example" in this application should not be explained as being more preferred or having more advantages than another embodiment or design scheme. To be precise, use of the word such as "example" or "for example" is intended to present a relative concept in a specific manner.

The technical solutions in embodiments of this application can be applied to various communication systems, for example, a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system, a new radio (new radio, NR) system, or a future communication system. This is not limited herein. Embodiments of this application may be further applied to a plurality of mobile communication scenarios based on the foregoing various communication systems, for example, point-to-point transmission between a base station and a UE, point-to-point transmission between UEs, multi-hop/relay transmission between a base station and a UE, and DC (Dual Connectivity, dual connectivity) or multi-connectivity between a plurality of base stations and a UE.

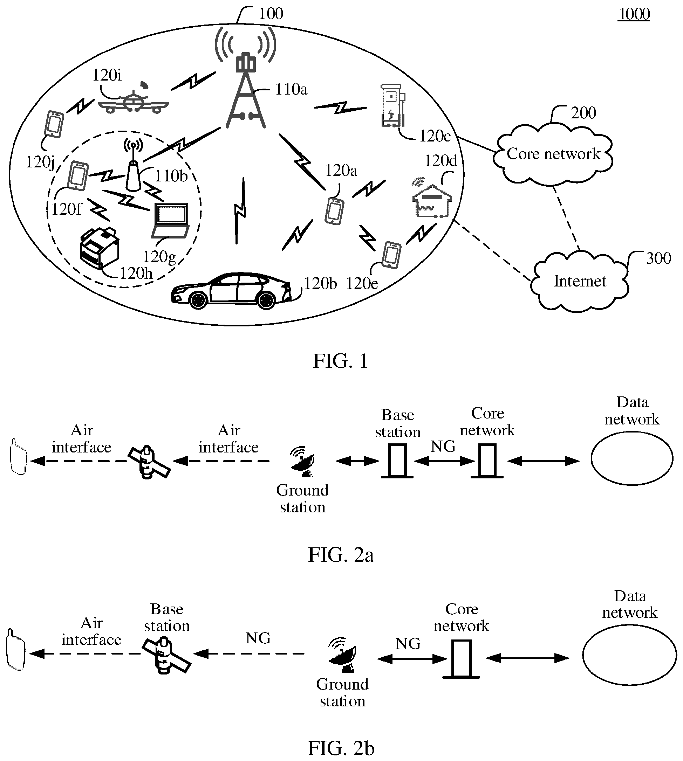

FIG. 1 is a diagram of an architecture of a communication system 1000 to which an embodiment of this application is applied. As shown in FIG. 1, the communication system includes a radio access network 100 and a core network 200. Optionally, the communication system 1000 may further include an internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and the radio access network device may be independent and different physical devices, or functions of the core network device and logical functions of the radio access network device are integrated into a same physical device, or some functions of the core network device and some functions of the radio access network device are integrated into one physical device. Terminals may be connected to each other in a wired or wireless manner, and radio access network devices may be connected to each other in a wired or wireless manner. FIG. 1 is merely a diagram. The communication system may further include another network device, for example, may further include a wireless relay device and a wireless backhaul device, which are not shown in FIG. 1.

The radio access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a base station in a future mobile communication system, an access node in a wireless local area network (wireless local area network, WLAN) system, or the like; or may be a module or a unit that completes some functions of a base station, for example, may be a central unit (central unit, CU), or may be a distributed unit (distributed unit, DU). The radio access network device may be a macro base station (for example, 110a in FIG. 1), may be a micro base station or an indoor base station (for example, 110b in FIG. 1), or may be a relay node or a donor node. A specific technology and a specific device form that are used by the radio access network device are not limited in embodiments of this application.

In embodiments of this application, an apparatus configured to implement a function of a network device may be a network device; or may be an apparatus, for example, a chip system, that can support a network device in implementing the function. The apparatus may be mounted in the network device. In the technical solutions provided in embodiments of this application, the technical solutions provided in embodiments of this application are described by using an example in which the apparatus configured to implement the function of the network device is a network device and the network device is a base station.

The terminal may also be referred to as a terminal device, a user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IoT), virtual reality, augmented reality, industrial control, autonomous driving, telemedicine, smart grid, smart furniture, smart office, smart wearable, smart transportation, and smart city. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A specific technology and a specific device form that are used by the terminal are not limited in embodiments of this application. In embodiments of this application, an apparatus configured to implement a function of the terminal may be a terminal, or may be an apparatus, for example, a chip system, that can support the terminal in implementing the function. The apparatus may be mounted in the terminal. In embodiments of this application, the chip system may include a chip, or may include a chip and another discrete component. In the technical solutions provided in embodiments of this application, the technical solutions provided in embodiments of this application are described by using an example in which the apparatus configured to implement the function of the terminal is a terminal and the terminal is a UE.

The base station and the terminal may be at fixed positions or movable. The base station and the terminal may be deployed on land, where the deployment includes indoor or outdoor, or handheld or vehicle-mounted deployment; may be deployed on water; or may be deployed on an airplane, a balloon, and a satellite in air. Application scenarios of the base station and the terminal are not limited in embodiments of this application.

Roles of the base station and the terminal may be relative. For example, the helicopter or the uncrewed aerial vehicle 120i in FIG. 1 may be configured as a mobile base station. For the terminal 120j accessing the radio access network 100 through 120i, the terminal 120i is a base station. However, for the base station 110a, 120i is a terminal. In other words, 110a and 120i communicate with each other according to a radio air interface protocol. Certainly, 110a and 120i may alternatively communicate with each other according to an interface protocol between base stations. In this case, for 110a, 120i is also a base station. Therefore, both the base station and the terminal may be collectively referred to as communication apparatuses, 110a and 110b in FIG. 1 each may be referred to as a communication apparatus having a function of a base station, and 120a to 120j in FIG. 1 each may be referred to as a communication apparatus having a function of a terminal.

Communication between the base station and the terminal, between base stations, or between terminals may be performed on a licensed spectrum, may be performed on an unlicensed spectrum, or may be performed on both a licensed spectrum and an unlicensed spectrum. Communication may be performed on a spectrum below 6 gigahertz (gigahertz, GHz), may be performed on a spectrum above 6 GHz, or may be performed on both a spectrum below 6 GHz and a spectrum above 6 GHz. A spectrum resource used for wireless communication is not limited in embodiments of this application.

In embodiments of this application, the function of the base station may alternatively be performed by a module (for example, a chip) in the base station, or may be performed by a control subsystem including the function of the base station. The control subsystem including the function of the base station herein may be a control center in the foregoing application scenarios, such as smart grid, industrial control, smart transportation, and smart city. The function of the terminal may alternatively be performed by a module (for example, a chip or a modem) in the terminal, or may be performed by an apparatus including the function of the terminal.

In this application, the base station sends a downlink signal or downlink information to the terminal, where the downlink information is carried on a downlink channel; and the terminal sends an uplink signal or uplink information to the base station, where the uplink information is carried on an uplink channel. To communicate with the base station, the terminal needs to establish a wireless connection to a cell controlled by the base station. The cell that establishes the wireless connection to the terminal is referred to as a serving cell of the terminal. When communicating with the serving cell, the terminal is further interfered by a signal from a neighboring cell.

In embodiments of this application, a PDCCH is merely used as an example of a downlink control channel. In different systems and different scenarios, the control channel may have different names. This is not limited in embodiments of this application.

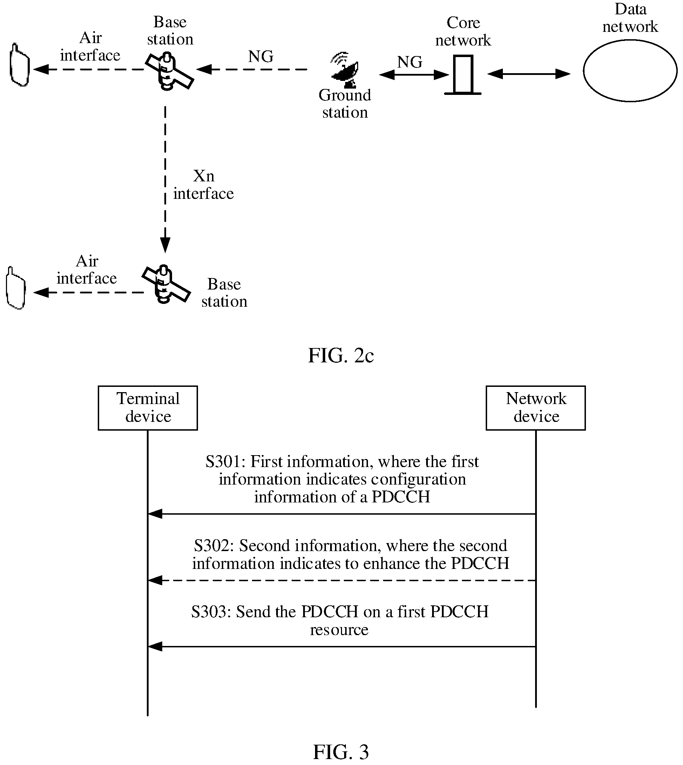

FIG. 2a to FIG. 2c are diagrams of three NTN network architectures according to this application. A ground terminal device accesses a network through an air interface (the air interface may be various types of air interfaces, for example, a 4G/5G air interface, or an air interface in a future network). As shown in FIG. 2a, a base station may be deployed on the ground and connected to a ground station that communicates with a satellite. As shown in FIG. 2b, a base station may alternatively be deployed on a satellite. The satellite is connected to a ground station through a radio link. The ground station and a ground base station are connected to a core network in a wired or wireless manner. There may be a radio link between satellites. As shown in FIG. 2c, if satellites have only a transparent transmission and forwarding function (that is, corresponding base stations are deployed on the ground), only transparent transmission and forwarding is implemented between the satellites; or if base stations or some functions of base stations are deployed on satellites, signaling exchanging and user data transmission between the base stations may be completed between the satellites.

Some network elements in FIG. 2a to FIG. 2c and interfaces thereof are described as follows:
Ground station: It is responsible for forwarding signaling and service data between a satellite base station and a core network.

Air interface: It is a radio link between a terminal and a base station.

Xn interface: It is an interface between base stations and is mainly used for exchanging signaling, for example, handover.

NG interface: It is an interface between a base station and the core network, and is mainly used for exchanging signaling like NAS signaling of the core network and service data of a user.

This application can be applied to 4G, 5G, or a future-defined communication system, and relates to radio access network elements such as a terminal device, a base station, and a ground station, and performs uplink and downlink data communication according to a wireless communication protocol. It should be noted that, in a 4G communication system, an Xn interface in the figure is referred to as an X2 interface, and an NG interface is an S1 interface.

To make embodiments of this application clearer, some concepts or content in embodiments of this application are/is briefly described herein.

### 1. Control resource set (control resource set, CORESET)

The CORESET may indicate a frequency domain resource position of a control channel and a length of a symbol occupied by the control channel in time domain. The symbol may be an orthogonal frequency division multiplexing (orthogonal frequency division multiplexing, OFDM) symbol.

In an initial access phase, usually, a CORESET first used for communication is a CORESETO. The CORESETO occupies a segment of consecutive PRB resources in frequency domain, and the CORESETO is used to accommodate a PDCCH payload for scheduling a system message SIB1 and the like. After decoding the system message SIB, a terminal may obtain a configuration of another CORESET by using an RRC configuration, where the configuration may be a segment of non-consecutive frequency domain PRB resources defined by using a bitmap.

Due to a large bandwidth, a concept of a BWP (bandwidth part, bandwidth part) is introduced in NR. A network side may allocate different BWPs based on different services. A CORESET is further introduced in the concept of the BWP. The network side configures a plurality of CORESETs and SSs in the BWP, and then determines, in a manner of pairing one CORESET and one SS, one time-frequency resource used for a different purpose. For example, a time-frequency resource determined based on one pair of CORESET and SS may be used for checking a downlink control information (downlink control information, DCI)-format (format) 0_0/1_0. Then, a time-frequency resource determined based on another pair of CORESET and SS is used for checking a DCI-format 0_1/1_1.

The CORESET corresponds to a group of consecutive or non-consecutive PRBs (physical resource blocks, physical resource blocks) in frequency domain. A size of a time domain resource occupied by the CORESET is one to three OFDM symbols, and a start position of the CORESET in time domain may be flexibly configured. A resource size granularity of the CORESET is a CCE (channel control element channel control element), each CCE occupies six consecutive REGs (consecutive in frequency domain or consecutive in time domain), and one REG includes one PRB (12 RE resources) in frequency domain and one OFDM symbol in time domain.

For a configuration of the CORESET on the network side, a maximum of 12 CORESETs (0 to 11) can be configured in each cell, a number of CORESETs in each DL BWP configured by a serving cell for a UE cannot exceed 4, and a value range of an CORESET index can only be 1 to 11, where an index 0 has been occupied by the CORESETO.

### 2. Search space set (search space, SS set)

The search space set may also be referred to as a search space group, or a search space. The search space may indicate time domain position information of a control channel. The control channel mentioned in embodiments of this application is a physical downlink control channel (Physical Downlink Control Channel, PDCCH).

In embodiments of this application, there are two types of search space sets: a common search space set (common search space set, CSS set) and a UE-specific search space set (UE-specific search space set, USS set). In embodiments of this application, the common search space set is also written as the CSS set, and the UE-specific search space set is also written as the USS set. Cells in embodiments of this application may include a primary cell and a secondary cell. A common search space set is usually configured for the primary cell, or a common search space set and a UE-specific search space set may be configured for the primary cell. A common search space set may be configured for the secondary cell, or a common search space set and a UE-specific search space set may be configured for the secondary cell. In some cases, only a UE-specific search space set may be configured for the secondary cell. This is not limited herein.

When a network device configures a search space set for a terminal device, the network device configures a search space set identifier for each search space set. The search space set identifier may also be referred to as an index number of the search space set. When the search space set is a common search space set, the search space set identifier is a common search space set identifier. When the search space set is a UE-specific search space set, the search space set identifier is a UE-specific search space set identifier.

The cell in embodiments of this application may be, for example, a cell covered by a base station. The cell is an area that provides a wireless communication service for a user, and is a basic unit of a wireless network. For example, in NR, an NR cell resource is added by running MML commands: ADD NRCELL and ADD NRDUCELL. A network side device may configure a plurality of cells for a terminal side device, where there is one cell in which initial access is initiated, the cell is referred to as a primary cell, and another cell becomes a secondary cell. All the cells jointly form coverage of the entire wireless network.

### 3. Aggregation level (Aggregation Level, AL)

The aggregation level refers to a number of control channel elements (control channel elements, CCEs) contained in a PDCCH. Currently, PDCCH aggregation levels include an AL1, an AL2, an AL4, an AL8, and an AL16. When performing PDCCH blind detection (or referred to as blind inspection) at a position of a specific PDCCH candidate configured by a network device, a UE needs to perform blind detection based on each possible PDCCH aggregation level.

### 4. Blind detection (blind detection, BD)

Downlink control information (downlink control information, DCI) is classified into a plurality of formats based on different purposes and content, for example, a random access radio network temporary identifier (random access radio network temporary identifier, RA-RNTI) and a paging radio network temporary identifier (paging radio network temporary identifier, P-RNTI). PDCCH information of different users is distinguished by using cell radio network temporary identifier (cell radio network temporary identifier, C-RNTI) information corresponding to the PDCCH information of the different users, that is, a cyclic redundancy check (cyclic redundancy check, CRC) of the DCI is masked by using the C-RNTI. A base station configures, for a user terminal (user equipment, UE) by using higher layer signaling (for example, radio resource control (radio resource control, RRC) signaling), a PDCCH candidate (PDCCH candidate) set in which DCI that needs to be monitored is located. Because the UE does not know in advance a specific PDCCH candidate or specific PDCCH candidates on which the base station sends DCI, but a user knows, based on configuration information of the base station, specific downlink control information that the user currently expects to receive, the UE needs to attempt to decode each PDCCH candidate in the set based on the configuration information, to be specific, the UE performs CRC check on information on the PDCCH candidate by using a corresponding radio network temporary identifier (radio network temporary identifier, RNTI). If the CRC check succeeds, the user knows that information of the DCI is successfully decoded. A behavior that the UE attempts to decode each PDCCH candidate to determine whether the corresponding DCI is received is referred to as blind detection. The set including the PDCCH candidate is a search space set, in other words, the search space set includes the PDCCH candidate, and all PDCCH candidates are located in respective corresponding CORESETs. Therefore, a search space set identifier is associated with an index number of the CORESET (the index number of the CORESET may also be referred to as a CORESET identifier or a CORESET index) in which the PDCCH candidate included in the search space set is located, and the CORESET associated with the search space set determines a control channel element (control channel element, CCE) index of the PDCCH candidate of the search space set in the CORESET.

### 5. Monitoring occasion

The monitoring occasion is also referred to as a PDCCH monitoring occasion (PDCCH monitoring occasion, PDCCH MO). A PDCCH monitoring occasion of one search space set (search space set, SS set) in one slot (slot) is determined based on both the SS set and configuration information of a CORESET associated with the SS set. Specifically, one PDCCH MO includes a first symbol of monitoring and monitoring duration. The first symbol of monitoring (the first symbol of monitoring is also referred to as a first symbol in some places in embodiments of this application) is configuration information of one search space set (the configuration information of the search space set is also referred to as SS set configuration information in some places in embodiments of this application), and the monitoring duration (the monitoring duration is also referred to as duration in some places in embodiments of this application) is configuration information of one control resource set. The SS set configuration information includes a 14-bit bitmap parameter (a monitoring symbol within a slot monitoringSymbolsWithinSlot, indicating, to a UE, a position of a monitoring start OFDM symbol, in one slot, of one SS set including the parameter), and each bit is in one-to-one correspondence with one orthogonal frequency division multiplexing (Orthogonal Frequency Division Multiplexing, OFDM) symbol (OFDM symbol, OS) in one slot, and indicates a first symbol of monitoring of the SS set in one slot. For example, assuming monitoringSymbolsWithinSlot=10000100000000, it indicates that monitoring the SS set needs to start from a 1^{st} OFDM symbol and a 6^{th} OFDM in one slot (in other words, first symbols of monitoring are the 1^{st} OFDM symbol and the 6^{th} OFDM in the slot). Assuming that the SS set is associated with a control resource set (control resource set, CORESET) whose duration is of a length of three OFDM symbols, PDCCH monitoring occasions of the SS set are a PDCCH MO 1 and a PDCCH MO 2 shown in FIG. 3. The PDCCH MO 1 occupies symbols 0, 1, and 2, and the PDCCH MO 2 occupies symbols 5, 6, and 7. The CORESET is a concept defined by a frequency domain width (in a unit of an RB) and a time domain duration length (in a unit of an OFDM symbol). After one SS set is associated with one CORESET, a concept of a PDCCH MO corresponding to the SS set can be determined. Therefore, monitoringSymbolsWithinSlot=10000100000000 may also be described as follows: One search space set has first symbols of two PDCCH MOs, which are respectively a time domain symbol 0 and a time domain symbol 5, in one slot. The search space set is associated with one CORESET that lasts for three symbols in time domain, that is, duration of the two PDCCH MOs is three symbols.

### 6. Repetition of PDCCH transmission

In discussion of NR Rel-17, the repetition of PDCCH transmission is defined as follows: An encoding/rate matching operation is based on one repetition of PDCCH transmission, and a same encoded bit is used in another repetition of PDCCH transmission. In each repetition of transmission, transmission of a same encoded bit and same DCI load information (same DCI bit content) is repeated by using a same aggregation level (aggregation level, AL) or a same number of CCEs.

It may be understood that a multi-station (namely, multi-transmission reception point (transmission reception point, TRP)) joint sending mechanism can be used to improve DCI transmission reliability. Specifically, after a same DCI information bit (source) is encoded into an encoded bit in the foregoing encoding mode, a plurality of TRPs separately send the encoded bit on different time-frequency resources. A UE may separately receive the plurality of encoded bits on the foregoing time-frequency resources, and then perform a joint parsing operation to obtain the DCI information bit (source), for example, separately perform channel estimation on the foregoing time-frequency resources, and demodulate received signals to obtain likelihood values (soft information) for combination. The foregoing operations may be equivalently understood as improving a transmission signal-to-noise ratio (SNR), to improve reliability.

An NTN has a long communication distance and a large communication link loss. Further, in consideration with penetration losses of buildings, bridges, and elevated roads, a power flux-density limitation, and other factors, a PDCCH link budget may not satisfy a decoding threshold. Therefore, a PDCCH needs to be further enhanced to ensure performance of the PDCCH in the NTN scenario.

FIG. 3 is a schematic flowchart of a communication method according to this application. This embodiment may be applied to a satellite communication scenario, in other words, a network device in this embodiment is deployed on a satellite, to improve coverage and performance of a PDCCH in an NTN scenario. Alternatively, this embodiment may be applied to a ground communication scenario, for example, may be used for enhancing coverage and performance of a PDCCH at a cell edge, in other words, a network device in this embodiment is deployed on the ground. This embodiment includes the following steps.

S301: The network device sends first information, where the first information indicates configuration information of a PDCCH. Correspondingly, a terminal device receives the first information.

The first information indicates the configuration information of the PDCCH. The configuration information of the PDCCH includes a CORESET and a search space set. The CORESET indicates information about a frequency domain resource occupied by the PDCCH, a number of OFDM symbols occupied in a time domain, and the like. The search space set indicates at least one of a start OFDM symbol (the OFDM symbol is briefly referred to as a symbol below) of a resource occupied by transmission of the PDCCH in time domain, an aggregation level of a PDCCH candidate included in the search space set, a number of PDCCH candidates at each aggregation level, a monitoring periodicity of the PDCCH candidate, information about a CORESET associated with the search space set, and the like. In an NR standard, each search space set is associated with at most one CORESET, and one CORESET may correspond to a plurality of different search space sets. One pair of an SS set and a CORESET (one SS set and a CORESET associated with the SS set) can be used for determining a monitoring position of a PDCCH. Therefore, the terminal device can determine, based on the CORESET and the search space set, a time-frequency resource position for transmitting the PDCCH, to further monitor the PDCCH at the corresponding time-frequency resource position.

In this embodiment, the first information may be an information element (information element, IE) or a field indicating the configuration information of the PDCCH, or may be an instruction or a message carrying the configuration information of the PDCCH. For example, the first information may be a master information block (master information block, MIB) message, a SIB1 message, or another message, and the another message is, for example, a newly defined message used for carrying the configuration information of the PDCCH. For another example, the first information may be radio resource control (radio resource control, RRC) signaling or other signaling, and the other signaling is, for example, newly defined signaling used for carrying the configuration information of the PDCCH. For still another example, the first information may be a PDCCH-configSIB1 field in a MIB message; a ControlResourceSet information element, a serachSpaceZero information element, a searchSpaceOtherSystemInformation information element, a ra-SearchSpace information element, a pagingSearchSpace information element, or a searchSpaceSIB1 information element in signaling PDCCH-ConfigCommon; or a SearchSpace information element, a ControlResourceSet information element, or another information element in signaling PDCCH-Config, and the another information element may be a newly defined information element indicating the configuration information of the PDCCH.

The following describes a configuration manner of the CORESET. For a configuration of the CORESET, in the NR standard, a maximum of 12 CORESETs (0 to 11) can be configured in each cell, a number of CORESETs in each DL BWP configured by a serving cell for a UE does not exceed 4, and a value range of a CORESET index is 1 to 11, where an index 0 has been occupied by a CORESETO.

The CORESETO is a CORESET dedicated to a Type0 CSS set, and is used for RMSI (SIB1) scheduling. A resource indication manner of the CORESETO is derived from four most significant bits (bits) of a field PDCCH-configSIB1 in an SSB→MIB message. Parameters such as a number of consecutive RBs occupied by the CORESETO in frequency domain, a number of time domain symbols, an SSB/CORESET0 multiplexing pattern, and a frequency domain physical resource block (physical resource block, PRB) offset may be determined by reading the four bits and looking up a table in TS 38.213.

Except the CORESETO, a configuration of another CORESET is derived from an RRC parameter configuration. The configuration of the another CORESET includes several parameters: a control resource set identifier (controlResourceSetId), a frequency domain resource (frequencyDomainResources), a number of consecutive symbols (duration), a CCE-to-REG mapping type (cce-REG-Mappingtype), and the like. The frequency domain resource (frequencyDomainResources) defines a size of a frequency domain resource of the CORESET, and is 45 bits. Each bit represents six PRBs. Starting from a PRB0, a most significant bit represents a lowest frequency in a configured BWP, indexes (indexes) are in ascending order, and a bit belonging to the CORESET needs to be set to 1. The duration, ranging from 1 to 3, is a number of consecutive symbols of the CORESET in time domain.

In NR, an SS set includes a CSS set, a USS set, and the like. The CSS set includes the following types: a Type0 CSS set, a Type0A CSS set, a Type0B CSS set, a Type1 CSS set, a Type1A CSS set, a Type2 CSS set, a Type2A CSS set, and a Type3 CSS set. The CSS set is mainly used for access and cell handover, or is used for control information related to a BCCH, paging, a RAR, or the like. The following separately describes configuration manners of different types of SS sets.

For a Type0 CSS set, there are the following three configuration manners: 1. Configuration information of the Type0 CSS set is located in four least significant bits of a parameter PDCCH_ConfigSIB1 (the parameter has 8 bits in total) of a MIB message. The terminal device decodes an SSB to obtain the MIB message, reads the four least significant bits of PDCCH_ConfigSIB1 in the MIB message, and obtains the configuration information of the Type0 CSS set through table lookup in TS 38.213. This configuration manner is used for a PDCCH resource used before the terminal obtains a system message (decodes a SIB1) during initial access of the terminal. 2. Configuration information of the Type0 CSS set is located in a searchSpaceZero information element of a higher-layer parameter PDCCH-ConfigCommon of RRC signaling. After successfully decoding a SIB1 message, the terminal device may obtain a reconfiguration of a resource of the Type0 CSS set through an RRC configuration, that is, obtain the higher-layer parameter PDCCH-ConfigCommon→searchSpaceZero, and obtain a corresponding updated configuration of the Type0 CSS set through table lookup in TS 38.213 based on the parameter. 3. Configuration information of the Type0 CSS set is located in a SearchSpace information element in searchSpaceSIB1 of a higher-layer parameter PDCCH-ConfigCommon of RRC signaling. The SearchSpace information element is used for configuring, in the RRC signaling, a PDCCH search space by using a plurality of parameters (including a PDCCH candidate aggregation level, a number of PDCCH candidates, a first symbol position of PDCCH monitoring, a monitoring slot periodicity, an offset, and the like).

A CSS set (Type0A/1/1A/2/2A/3 CSS set) of another type different from the Type0 CSS set needs to be configured by using an RRC parameter after the terminal device decodes a SIB1. A signaling procedure of the CSS set (Type0A/1/1A/2/2A/3 CSS set) is PDCCH-ConfigCommon→commonSearchSpaceList→SearchSpace.

For a Type3 common search space set (type3 CSS set), a configuration manner thereof belongs to UE-specific RRC signaling: PDCCH-Config→SearchSpace (type Common).

The UE-specific search space set (USS set) also needs to be configured by using RRC signaling after RRC activation: PDCCH-Config→SearchSpace (type UE-specific).

For different types of PDCCHs, messages carrying the first information are different. For example, the first information indicates configuration information of a Type0-PDCCH (a PDCCH used for scheduling a SIB1), and the first information is carried in a master information block (master information block, MIB) message. For another example, the first information indicates configuration information of a Type0A-PDCCH, a Type0B-PDCCH, a Type 1-PDCCH, a Type1A-PDCCH, a Type2-PDCCH, a Type2A-PDCCH, a Type3-PDCCH, and the like, and the first information is carried in RRC signaling.

The configuration information of the Type0-PDCCH includes a CORESETO and a Type0 CSS set. The CORESETO and the Type0 CSS set are indicated by PDCCH-ConfigSIB1 (8-bit field) in a MIB message. The terminal device determines configurations of the CORESETO and the Type0 CSS set based on PDCCH-ConfigSIB1. A resource indication manner of the CORESETO is derived from four most significant bits of a field PDCCH-configSIB1 in an SSB→MIB message. The Type0 CSS set is derived from four least significant bits of the field PDCCH-configSIB1 in the SSB→MIB message. The terminal device determines, through table lookup based on the four least significant bits of PDCCH-ConfigSIB1, an SSB/CORESET multiplexing pattern, a frequency band, and the like, the configuration of the Type0 CSS set, for example, an SS index of the Type0 CSS set, a number of CSS sets in a monitoring slot, and a first symbol of the CSS set in a slot; and the terminal device determines, based on parameters in a table, to monitor, in time domain, a time domain position (a system frame number (system frame number, SFN), an intra-frame slot index (slot index), and the like) of a PDCCH candidate in the Type0 CSS set.

S302: The network device sends second information, where the second information indicates to enhance the PDCCH. Correspondingly, the terminal device receives the second information.

The second information indicates to enhance the PDCCH. The network device is to enhance the PDCCH, and sends the second information to the terminal device, to indicate the terminal device to monitor and process an enhanced PDCCH. This step is an optional step and is indicated by using a dashed line in FIG. 3.

It should be noted that there is no sequence between step S301 and step S302. For example, S301 may be performed before S302. For another example, S302 may alternatively be performed before S301. For still another example, S301 and S302 may alternatively be performed simultaneously. For example, a case in which S301 and S302 are simultaneously performed is as follows: The first information and the second information are carried in a same message; or the first information is a message or signaling, and the second information is an information element or a field in the first information.

The network device may enhance the PDCCH when a condition is satisfied. For example, the network device may enhance the PDCCH when downlink performance is poor, to improve PDCCH link performance and reliability, and improve a coverage capability of the PDCCH. The network device enhances the PDCCH when at least one of the following conditions is satisfied:
1. The network device communicates with the terminal device in an NTN frequency band. To be specific, in an NTN scenario, the network device is deployed on a satellite, and the network device may communicate with the terminal device in the NTN frequency band. The NTN frequency band is a satellite-specific frequency band, for example, an n255 frequency band or an n256 frequency band; or the NTN frequency band may be another frequency band defined in the future for NTN communication.
2. An elevation angle from a beam used by the network device to communicate with the terminal device to the network device is less than a preset angle, or an elevation angle from a cell center of a cell accessed by the terminal device to the network device is less than a preset angle. The preset angle is, for example, 45 degrees, 40 degrees, 30 degrees, 25 degrees, or 20 degrees. For example, in an NTN scenario, a topology and a relative position of each cell or beam under a satellite are known to the network device. Therefore, the network device may determine an elevation angle from a center of a beam or a cell to the network device based on the topology and the relative position of the cell or the beam. If the elevation angle from the center of the beam or the cell to the network device is less than the preset angle, it indicates that the terminal device is located in a coverage edge area of the network device, and link performance may be poor. Therefore, the network device may enhance the PDCCH in this case.
3. The network device receives third information from the terminal device. The third information indicates to enhance the PDCCH. Alternatively, the third information is used for requesting the network device to enhance the PDCCH. Alternatively, the third information is used for notifying the network device that the terminal device expects the network device to enhance the PDCCH. Alternatively, the third information is used for notifying the network device that the terminal device has a PDCCH enhancement processing capability. To be specific, before S302, the terminal device sends the third information to the network device, and the network device may enhance the PDCCH in response to the third information. Optionally, the network device may send the third information to the network device when determining, through measurement, that downlink channel signal quality is poor. For example, the terminal device receives an SSB, and measures a reference signal received power (reference signal received power, RSRP) of a downlink synchronization signal. If a measurement value of the RSRP is less than an RSRP threshold, the terminal device sends the third information to the network device. Alternatively, the network device may send the third information to the network device when the network device has a PDCCH enhancement processing capability, where the third information is, for example, a terminal capability report (capability report) of the terminal device, to notify that the network device has the PDCCH enhancement processing capability. For example, the terminal device can receive repetitions of PDCCH transmission and perform combination processing. Optionally, when the third information is the terminal capability report of the terminal device, a manner in which the terminal device sends the third information may be as follows: The network device groups physical random access channel (physical random access channel, PRACH) resources in a SIB/RRC message, for example, groups preambles (preambles) or groups PRACH occasions (PRACH occasions, ROs). A part of the grouped PRACH resources are associated with a repetition of PDCCH transmission in a common search space set. The terminal device detects a downlink RSRP. When the downlink RSRP is less than the RSRP threshold, the terminal device selects a PRACH resource that is in the PRACH resources and that is associated with the repetition of PDCCH transmission in the common search space set, to send a message 1 (msg1), that is, sends the third information to the network device, to initiate a request/capability reporting to the network device. After receiving the third information, the network device uses the third information as a reference to determine whether to enhance the PDCCH.

When the network device determines that the condition for enhancing the PDCCH is satisfied, the network device may enhance the PDCCH by increasing a PDCCH transmission resource, that is, transmit one PDCCH by using more time-frequency resources. In this embodiment, the PDCCH transmission resource may be a time-frequency resource used for transmission of the PDCCH. The network device determines that the condition for enhancing the PDCCH is satisfied, and configures a first PDCCH transmission resource for transmission of the PDCCH, and the network device may send the second information to the terminal device, where the second information indicates the network device to enhance the PDCCH. Therefore, the terminal device may determine the first PDCCH transmission resource of the PDCCH based on the first information and the second information, and monitor an enhanced PDCCH on the first PDCCH transmission resource.

In this embodiment, the first PDCCH transmission resource includes a second PDCCH transmission resource. The second PDCCH transmission resource is a transmission resource used for enhancing the PDCCH. Optionally, the second PDCCH transmission resource may be explained as a time-frequency resource that is used for transmission of the PDCCH and that is added to enhance the PDCCH. The second PDCCH transmission resource may be all transmission resources added for enhancing the PDCCH. The second PDCCH transmission resource may alternatively be a part of transmission resources added for enhancing the PDCCH.

In a possible implementation, the first PDCCH transmission resource may be an extended transmission resource. In other words, the network device configures more PDCCH transmission resources to enhance the PDCCH. In other words, a size of the first PDCCH transmission resource is greater than a size of a fourth PDCCH transmission resource. The fourth PDCCH transmission resource is a PDCCH transmission resource configured by the network device when the condition is not satisfied, that is, when the PDCCH is not to be enhanced. In other words, in comparison with the PDCCH transmission resource configured by the network device when the PDCCH is not to be enhanced, the network device configures more PDCCH transmission resources when the PDCCH is to be enhanced. The second PDCCH transmission resource is a transmission resource newly added in the extended PDCCH transmission resource. For example, when the PDCCH is not to be enhanced, a size of the fourth PDCCH transmission resource configured by the network device is 48 resource blocks (resource blocks, RBs); or when the PDCCH is to be enhanced, a size of the first PDCCH transmission resource configured by the network device is 192 RBs. In other words, the network device newly adds 144 RBs to enhance the PDCCH, and the second PDCCH transmission resource is a transmission resource newly added relative to the fourth PDCCH transmission resource. A size of the second PDCCH transmission resource may be 144 RBs, or may be less than 144 RBs, for example, 24 RBs, 48 RBs, or 96 RBs. This is not limited herein. It may be understood that the first PDCCH transmission resource, the second PDCCH transmission resource, the fourth PDCCH transmission resource, and a difference between the first PDCCH transmission resource and the second PDCCH transmission resource herein are merely used as examples, and should not be understood as limitations on this application.

In another possible implementation, when the condition is satisfied, the network device enhances the PDCCH but does not extend total PDCCH transmission resources. In other words, the network device does not configure more PDCCH transmission resources to enhance the PDCCH. For example, the network device may enhance the PDCCH by using an idle PDCCH resource. In this case, a size of the first PDCCH transmission resource is the same as a size of a fourth PDCCH transmission resource. In other words, the first PDCCH transmission resource configured by the network device when the PDCCH is to be enhanced is the same as the fourth PDCCH transmission resource configured when the PDCCH is not to be enhanced. In other words, when the condition is satisfied, the network device does not extend the total PDCCH transmission resources to enhance the PDCCH, but enhances the PDCCH by using an idle PDCCH transmission resource in the fourth PDCCH transmission resource. In this case, the second PDCCH transmission resource may be the idle resource in the fourth PDCCH transmission resource. The idle resource is a resource that is not used or occupied in the fourth PDCCH transmission resource. For example, the size of the fourth PDCCH transmission resource is 48 RBs, a PDCCH payload actually occupies 24 RBs of the 48 RBs, and remaining 24 RBs are not used for sending the PDCCH payload, in other words, the fourth PDCCH transmission resource has an idle resource of 24 RBs. In this case, the network device may enhance the PDCCH by using the idle resource of 24 RBs, and does not additionally configure a new PDCCH transmission resource to enhance the PDCCH.

In another implementation, the network device may alternatively enhance the PDCCH by using different PDCCH monitoring occasions, without extending total PDCCH transmission resources. For example, the network device configures a plurality of PDCCH monitoring occasions for the PDCCH according to a standard protocol. When the condition is satisfied, the network device associates the plurality of PDCCH monitoring occasions, and enhances the PDCCH by using PDCCH transmission resources corresponding to the plurality of PDCCH monitoring occasions.

The first PDCCH transmission resource further includes a third PDCCH transmission resource. The third PDCCH transmission resource and the second PDCCH transmission resource do not overlap each other.

In this embodiment, enhancing the PDCCH includes but is not limited to the following manners:
1. Repeating transmission of the PDCCH, or increasing a number of repetitions of PDCCH transmission. For example, a single time of PDCCH transmission is enhanced to repetitions of PDCCH transmission. For another example, two repetitions of PDCCH transmission are enhanced to three times, four times, or more times. The network device may repeat sending the PDCCH in a frequency division multiplexing manner, or sending the PDCCH in a time division multiplexing manner. This is not limited herein. The network device may associate the second PDCCH transmission resource with the third PDCCH transmission resource, and associate corresponding PDCCH candidates in the second PDCCH transmission resource and the third PDCCH transmission resource, so that the network device can repeat sending the PDCCH on the associated PDCCH candidates.
2. Increasing an PDCCH aggregation level. Increasing the PDCCH aggregation level can reduce a code rate of a PDCCH payload, to improve performance of the PDCCH and improve a success rate of decoding the PDCCH by the terminal device. For example, if the PDCCH aggregation level is 4, the PDCCH aggregation level may be increased to 8, 16, 20, 24, 32, 64, or a larger aggregation level; if the PDCCH aggregation level is 8, the PDCCH aggregation level may be increased to 16, 20, 24, 32, 64, or a larger aggregation level; or if the PDCCH aggregation level is 16, the PDCCH aggregation level may be increased to 20, 24, 32, 64, or a larger aggregation level. The network device may use the first PDCCH transmission resource as a resource pool, and send the PDCCH on the first PDCCH transmission resource at a higher aggregation level.
3. Repeating transmission of the PDCCH, and increasing a PDCCH aggregation level. In other words, transmission of the PDCCH may be repeated, and the PDCCH aggregation level may also be increased.

The network device determines, when the condition is satisfied, to enhance the PDCCH, and sends the second information to the terminal device, where the second information indicates to enhance the PDCCH. Correspondingly, the terminal device determines, based on the second information, that the PDCCH is to be enhanced, determines the first PDCCH transmission resource based on the first information, monitors repetitions of the PDCCH on the first PDCCH transmission resource, and/or performs PDCCH blind detection at a higher aggregation level. Performing the PDCCH blind detection at the higher aggregation level may be performing PDCCH blind detection starting from a highest aggregation level. Alternatively, performing PDCCH blind detection at the higher aggregation level may mean that the terminal device starts to perform PDCCH blind detection from a first aggregation level, where the first aggregation level is higher than a second aggregation level, and the second aggregation level is an aggregation level used when the terminal device starts to perform PDCCH blind detection without enhancing the PDCCH. For example, when the PDCCH is not to be enhanced, the PDCCH blind detection is started from an aggregation level 4; or when the PDCCH is to be enhanced, the PDCCH blind detection is started from an aggregation level 8/16/20/24/32/64, and the PDCCH blind detection does not need to be performed at the aggregation level 4. Alternatively, in a possible implementation, the second information indicates an aggregation level used by the network device, and the terminal device performs PDCCH blind detection based on the aggregation level.

In a possible scenario, the network device configures more PDCCH transmission resources (the first PDCCH transmission resource is greater than the fourth PDCCH transmission resource) to enhance the PDCCH, but the first information remains unchanged compared with the first information when the PDCCH is not to be enhanced. In this case, the second information may indicate the terminal device to interpret, based on the first information, a PDCCH transmission resource (namely, the first PDCCH transmission resource) including more resources, and associate the second PDCCH transmission resource with the third PDCCH transmission resource in the first PDCCH transmission resource, to monitor repetitions of the PDCCH on the second PDCCH transmission resource and the third PDCCH transmission resource, and/or perform PDCCH blind detection on the first PDCCH transmission resource at a higher aggregation level. In another possible scenario, the network device does not configure more PDCCH transmission resources (the first PDCCH transmission resource is the same as the fourth PDCCH transmission resource), and the first information remains unchanged compared with the first information when the PDCCH is not to be enhanced. In this case, the second information may indicate the terminal device to associate the second PDCCH transmission resource with the third PDCCH transmission resource in the first PDCCH transmission resource, to monitor repetitions of the PDCCH on the second PDCCH transmission resource and the third PDCCH transmission resource, and/or perform PDCCH blind detection on the first PDCCH transmission resource at a higher aggregation level. In still another possible scenario, the network device configures more PDCCH transmission resources (the first PDCCH transmission resource is greater than the fourth PDCCH transmission resource) to enhance the PDCCH, and the first information indicates the first PDCCH transmission resource. In this case, the second information may indicate the terminal device to associate the second PDCCH transmission resource with the third PDCCH transmission resource in the first PDCCH transmission resource, to monitor repetitions of the PDCCH on the second PDCCH transmission resource and the third PDCCH transmission resource, and/or perform PDCCH blind detection on the first PDCCH transmission resource at a higher aggregation level.

Optionally, associating the second PDCCH transmission resource with the third PDCCH transmission resource in the first PDCCH transmission resource further includes: associating corresponding PDCCH candidates in the second PDCCH transmission resource and the third PDCCH transmission resource. The network device may repeat sending the PDCCH on the associated PDCCH candidates, and the terminal device monitors repetitions of the sent PDCCH on the associated PDCCH candidates. The second PDCCH transmission resource may include at least one PDCCH candidate, and the third PDCCH transmission resource may include at least one PDCCH candidate. For example, PDCCH candidates whose indexes are the same in the second PDCCH transmission resource and the third PDCCH transmission resource may be associated, or PDCCH candidates whose aggregation levels are the same in the second PDCCH transmission resource and the third PDCCH transmission resource may be associated.

In this embodiment, the second information may be implemented in a plurality of manners. The second information may be a specific value, a specific information element, a specific message, or the like. The second information may be carried in a MIB message, or may be carried in RRC signaling. Alternatively, the second information may be carried in DCI. The second information may be a newly set information element in the MIB message/RRC signaling/DCI, or may be carried in an idle field or a reserved field in the MIB information/RRC signaling/DCI. The second information may include at least one of the following parameters:
1. PDCCH enhanced switch. The PDCCH enhanced switch indicates whether the PDCCH is to be enhanced. A size of the PDCCH enhanced switch may be 1 bit, to reduce overheads of the second information. For example, if a value of the PDCCH enhanced switch is 0, it indicates that the PDCCH is to be enhanced; or if a value of the PDCCH enhanced switch is 1, it indicates that the PDCCH is not to be enhanced. Alternatively, if a value of the PDCCH enhanced switch is 1, it indicates that the PDCCH is to be enhanced; or if a value of the PDCCH enhanced switch is 0, it indicates that the PDCCH is not to be enhanced. Certainly, the size of the PDCCH enhanced switch may alternatively be 2 bits, 3 bits, or more bits. This is not limited herein. In another implementation, the PDCCH enhanced switch may be an information element. If the network device sends the information element, it indicates that the PDCCH is to be enhanced; or if the network device does not send the information element, it indicates that the PDCCH is not to be enhanced. Alternatively, if the network device sends the information element, it indicates that the PDCCH is not to be enhanced; or if the network device does not send the information element, it indicates that the PDCCH is to be enhanced. When the PDCCH enhanced switch indicates that the PDCCH is not to be enhanced, the terminal device determines the fourth PDCCH transmission resource based on the first information, and monitors the PDCCH on the fourth PDCCH transmission resource. When the PDCCH enhanced switch indicates that the PDCCH is to be enhanced, the terminal device is triggered to determine the first PDCCH transmission resource based on the first information, and monitor the PDCCH on the first PDCCH transmission resource. Optionally, when the PDCCH enhanced switch indicates that the PDCCH is to be enhanced, the terminal device is triggered to associate resources in the first PDCCH transmission resource and associate PDCCH candidates in the resources, for example, associate the second PDCCH transmission resource with the third PDCCH transmission resource, and associate corresponding PDCCH candidates in the second PDCCH transmission resource and the third PDCCH transmission resource, so that the terminal device monitors repetitions of the PDCCH on the associated PDCCH candidates, and/or perform PDCCH blind detection at a higher aggregation level.
2. Number of repetitions of PDCCH transmission. Alternatively, it may also be referred to as a PDCCH transmission repetition factor. The number of repetitions of PDCCH transmission indicates a number of times that transmission of the PDCCH is repeated, so that the second information can accurately indicate the number of repetitions of transmission. In a possible implementation, a size of the number of repetitions of PDCCH transmission may be 1 bit. For example, when a value of the number of repetitions of PDCCH transmission is 0, it indicates that transmission of the PDCCH is not repeated; or when a value of the number of repetitions of PDCCH transmission is 1, it indicates that transmission of the PDCCH is repeated twice, three times, four times, or more times. Alternatively, when a value of the number of repetitions of PDCCH transmission is 1, it indicates that transmission of the PDCCH is not repeated; or when a value of the number of repetitions of PDCCH transmission is 0, it indicates that transmission of the PDCCH is repeated twice, three times, four times, or more times. In another possible implementation, a size of the number of repetitions of PDCCH transmission may be 2 bits. For example, when a value of the number of repetitions of PDCCH transmission is 00, it indicates that transmission of the PDCCH is not repeated; when a value of the number of repetitions of PDCCH transmission is 01, it indicates that transmission of the PDCCH is repeated twice; when a value of the number of repetitions of PDCCH transmission is 10, it indicates that transmission of the PDCCH is repeated twice; or when a value of the number of repetitions of PDCCH transmission is 11, it indicates that transmission of the PDCCH is repeated four times. It may be understood that the value of the number of repetitions of PDCCH transmission and the number of repetitions of PDCCH transmission indicated by the value of the number of repetitions of PDCCH transmission herein are all examples, and should not be understood as limitations on this application. For example, the value 11 of the number of repetitions of PDCCH transmission may alternatively indicate that transmission of the PDCCH is not repeated, or the value 10 of the number of repetitions of PDCCH transmission indicates that transmission of the PDCCH is repeated four times. Examples are not listed one by one herein. Certainly, the size of the number of repetitions of PDCCH transmission may alternatively be 3 bits, 4 bits, or more bits. This is not limited herein. When the value of the number of repetitions of PDCCH transmission indicates that transmission of the PDCCH is repeated more than two times, that is, when the network device is indicated to enhance the PDCCH, the terminal device is triggered to determine the first PDCCH transmission resource based on the first information, and receive, on the first PDCCH transmission resource based on the number of repetitions of PDCCH transmission, repetitions of the PDCCH.
3. PDCCH aggregation level. The PDCCH aggregation level may indicate whether an aggregation level for transmitting the PDCCH is to be increased. Alternatively, the PDCCH aggregation level may indicate a specific aggregation level used by the network device to enhance the PDCCH. In a possible implementation, a size of the PDCCH aggregation level may be 1 bit. For example, when a value of the PDCCH aggregation level is 0, it indicates that the PDCCH aggregation level is not to be increased; or when a value of the PDCCH aggregation level is 1, it indicates that the network device is to transmit the PDCCH at a higher PDCCH aggregation level. Alternatively, when a value of the PDCCH aggregation level is 1, it indicates that the PDCCH aggregation level is not to be increased; or when a value of the PDCCH aggregation level is 0, it indicates that the network device is to transmit the PDCCH at a higher PDCCH aggregation level. In another possible implementation, a size of the PDCCH aggregation level may be 2 bits. For example, when a value of the PDCCH aggregation level is 00, it indicates that the PDCCH aggregation level is not to be increased; when a value of the PDCCH aggregation level is 01, it indicates that the PDCCH aggregation level is 8; when a value of the PDCCH aggregation level is 10, it indicates that the PDCCH aggregation level is 16; or when a value of the PDCCH aggregation level is 11, it indicates that the PDCCH aggregation level is 32. It may be understood that the value of the PDCCH aggregation level and the PDCCH aggregation level indicated by the value of the PDCCH aggregation level herein are all examples, and should not be understood as limitations on this application. For example, the value 11 of the PDCCH aggregation level may alternatively indicate that the PDCCH aggregation level is not to be increased or the PDCCH aggregation level is 64; or the value 00 of the PDCCH aggregation level indicates that the PDCCH aggregation level is 8. Examples are not listed one by one herein. Certainly, the size of the PDCCH aggregation level may alternatively be 3 bits, 4 bits, or more bits. This is not limited herein. When the value of the PDCCH aggregation level indicates the network device to increase the PDCCH aggregation level, that is, indicates the network device to enhance the PDCCH, the terminal device is triggered to determine the first PDCCH transmission resource based on the first information, and perform PDCCH blind detection on the first PDCCH transmission resource based on the PDCCH aggregation level, perform PDCCH blind detection starting from a higher PDCCH aggregation level, or perform PDCCH blind detection starting from a highest PDCCH aggregation level, to improve blind detection efficiency.
4. Associated CORESETs. The associated CORESETs indicate at least two associated CORESETs, and further, search space sets corresponding to the at least two associated CORESETs are associated. Alternatively, the at least two CORESETs are associated, and the search space sets respectively associated with the at least two CORESETs are associated. Optionally, the second information includes associated CORESETs and associated search space sets, and the associated search space set are search space sets respectively associated with the associated CORESETs. For example, when at least one CORESET is associated with a plurality of search space sets, the second information may include associated CORESETs and associated search space sets. Optionally, the second information includes associated CORESETs, associated search space sets, and associated PDCCH candidates in the associated search space sets. For example, if PDCCH candidate aggregation levels and numbers of the PDCCH candidates in a plurality of associated search space sets are different, the second information may further indicate associated PDCCH candidates in the associated search space set. The associated search space sets may be search space sets of a same type, or may be search space sets of different types. Therefore, when the network device enhances the PDCCH, configuration flexibility of the first PDCCH transmission resource can be improved. The terminal device can determine the first PDCCH transmission resource based on the associated CORESETs and the first information. The first PDCCH transmission resource includes a PDCCH transmission resource configured based on the associated CORESETs and the associated search space sets.
5. Offset value. The offset value may be a symbol offset value, a slot offset value, interval duration, or the like. The offset value indicates an offset of the second PDCCH transmission resource relative to the third PDCCH transmission resource in time domain.

In this embodiment, the network device may enhance a PDCCH in a common search space, for example, the Type0 CSS set, the Type0A CSS set, the Type0B CSS set, the Type1 CSS set, the Type1A CSS set, the Type2 CSS set, the Type2A CSS set, or the Type3 CSS set. The network device may further enhance a PDCCH in a USS set, for example, increase a number of repetitions of PDCCH transmission in the USS set. For example, the number of repetitions of PDCCH transmission in the USS set is greater than or equal to 3. It can be learned from the descriptions of S301 that different types of search space sets and different types of CORESETs are configured in different manners. Therefore, for PDCCHs in different types of search space sets, manners in which the network device configures the first PDCCH transmission resource, manners in which the network device sends the second information, and manners in which the terminal device determines the first PDCCH transmission resource are different.

The following separately describes a manner of enhancing a PDCCH in the Type0 CSS set and a manner of enhancing a PDCCH in a search space of another type (a search space other than the Type0 CSS set, for example, including the Type0A CSS set, the Type0B CSS set, the Type1 CSS set, the Type1A CSS set, the Type2 CSS set, the Type2A CSS set, the Type3 CSS set, and the USS set).
1. Enhancing the PDCCH in the Type0 CSS set (briefly referred to as a Type0-PDCCH below, where the Type0-PDCCH is used for scheduling a SIB1).

A type of a CORESET used for the Type0 CSS set is a CORESETO (namely, a CORESET whose index is 0). The Type0 CSS set and the CORESETO jointly define a transmission resource of a PDCCH candidate of the Type0 CSS set. In S301, a resource configuration manner of the Type0-PDCCH is described, to be specific, four most significant bits of the parameter PDCCH-ConfigSIB1 in the MIB carry configuration information of the CORESETO, and four least significant bits carry configuration information of the Type0 CSS set. The terminal device determines, through table lookup based on the four most significant bits of PDCCH-ConfigSIB1, an SSB/CORESET multiplexing pattern, a number of consecutive PRBs occupied by the CORESETO, a number of OFDM symbols (sometimes briefly referred to as symbols below for short) occupied by the CORESETO, and the like. The terminal device determines, through table lookup based on the four least significant bits of PDCCH-ConfigSIB1, an SS index of the Type0 CSS set, a number of CSS sets in a monitoring slot, a start OFDM symbol of the SS set in the slot, and the like.

For the Type0-PDCCH, when the condition is satisfied, the network device configures, in a plurality of manners, the first PDCCH transmission resource to enhance the Type0-PDCCH. Correspondingly, the terminal device also determines the first PDCCH transmission resource in a plurality of manners. The following PDCCH enhancement manners 1 to 5 are manners of enhancing the Type0-PDCCH.

Manner 1: Enhancing the PDCCH based on associated Type0-PDCCH monitoring occasions.

According to the NR standard, when the SSB/CORESET multiplexing pattern is 1, the terminal device is configured to monitor the Type0-PDCCH in two slots, where the two slots include associated Type0-PDCCH monitoring occasions. The associated Type0-PDCCH monitoring occasions include, for example, a first Type0-PDCCH monitoring occasion and a second Type0-PDCCH monitoring occasion. The first Type0-PDCCH monitoring occasion and the second Type0-PDCCH monitoring occasion respectively belong to two different slots. The terminal device needs to monitor the Type0-PDCCH on the first Type0-PDCCH monitoring occasion and the second Type0-PDCCH monitoring occasion. The two slots may be two adjacent slots, for example, a slot n₀ and a slot n₀₊₁. Alternatively, the two slots may be two non-adjacent slots, for example, a slot n₀ and a slot n₀₊₄, or a slot n₀ and a slot n₀₊₈. The NR standard does not specify that the associated Type0-PDCCH monitoring occasions are used for repeating sending the Type0-PDCCH, in other words, the associated Type0-PDCCH monitoring occasions are not used for enhancing the Type0-PDCCH.

However, in this manner, the network device enhances the Type0-PDCCH based on the associated Type0-PDCCH monitoring occasions. For example, the network device repeats sending the Type0-PDCCH on the associated Type0-PDCCH monitoring occasions; and/or the network device sends the PDCCH at a higher aggregation level on resources corresponding to the associated Type0-PDCCH monitoring occasions. Specifically, the first PDCCH transmission resource includes resources corresponding to the associated Type0-PDCCH monitoring occasions. For example, the first PDCCH transmission resource includes the second PDCCH transmission resource and the third PDCCH transmission resource, where the third PDCCH transmission resource is a resource corresponding to the first Type0-PDCCH monitoring occasion, and the second PDCCH transmission resource is a resource corresponding to the second Type0-PDCCH monitoring occasion. The network device enhances the Type0-PDCCH on the first PDCCH transmission resource. For example, the second PDCCH transmission resource is associated with the third PDCCH transmission resource, and the network device may repeat sending the Type0-PDCCH on the second PDCCH transmission resource and the third PDCCH transmission resource. Alternatively, the network device sends the Type0-PDCCH on the first PDCCH transmission resource at a higher aggregation level. Alternatively, the network device may increase an aggregation level of the Type0-PDCCH, and repeat transmission of the Type0-PDCCH on the first PDCCH transmission resource.

The network device sends the first information and the second information to the terminal device. The first information includes, for example, PDCCH-ConfigSIB1, so that the terminal device can determine, through table lookup based on the first information, configuration information of the CORESETO and the Type0 CSS set, and determine that the SSB/CORESET multiplexing pattern is 1, to determine associated Type0-PDCCH monitoring occasions. In this manner, the second information indicates to enhance the PDCCH based on the associated Type0-PDCCH monitoring occasions. Further, in response to the second information, the terminal device monitors repetitions of the transmitted Type0-PDCCH on the associated Type0-PDCCH monitoring occasions and performs combination, and/or performs Type0-PDCCH candidate blind detection at a higher aggregation level.

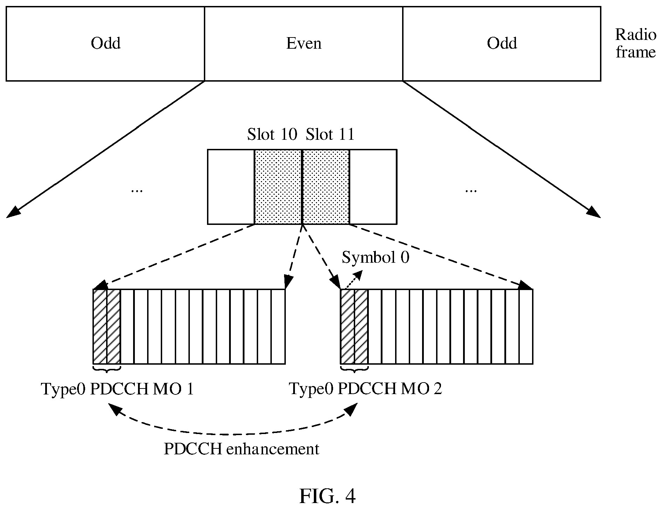

An example is shown in FIG. 4. In FIG. 4, it is assumed that a system frame number is an even number (even), the first information indicates that the CORESETO occupies two consecutive symbols and the SSB/CORESET multiplexing pattern is 1, the first information further indicates that a start OFDM symbol of the Type0 CSS set in a slot is 0, and associated Type0-PDCCH monitoring occasions (Type0-PDCCH MO 1 and Type0-PDCCH MO 2) respectively belong to two consecutive slots (slot 10 and slot 11). The slot 10 includes the Type0-PDCCH MO 1, and the slot 11 includes the Type0-PDCCH MO 2, to indicate that the terminal device needs to monitor the PDCCH on the Type0-PDCCH MO 1 in the slot 10 and on the Type0-PDCCH MO 2 in the slot 11. The network device determines that the condition is satisfied, enables to enhance the PDCCH, and sends the second information to the terminal device. In addition, the network device repeats sending the Type0-PDCCH on the Type0-PDCCH MO 1 in the slot 10 and on the Type0-PDCCH MO 2 in the slot 11. The terminal device determines the Type0-PDCCH MO 1 in the slot 10 and the Type0-PDCCH MO 2 in the slot 11 based on the first information, and determines, based on the second information, that the Type0-PDCCH MO 1 and the Type0-PDCCH MO 2 are used for enhancing the Type0-PDCCH, so as to monitor repetitions of the transmitted Type0-PDCCH on the Type0-PDCCH MO 1 and the Type0-PDCCH MO 2, and combine the repetitions of the transmitted Type0-PDCCH.

In this manner, the second information may be the PDCCH enhanced switch, and the terminal device can determine, based on the second information, that the network device enables to enhance the PDCCH, so that the terminal monitors repetitions of transmission of the Type0-PDCCH on the associated Type0-PDCCH monitoring occasions and performs combination, and/or performs Type0-PDCCH candidate blind detection at a higher aggregation level. Alternatively, the second information may be the number of repetitions of PDCCH transmission. The terminal device can determine, based on the second information, that the network device repeats transmission of the Type0-PDCCH on the associated Type0-PDCCH monitoring occasions and determines the number of repeated transmissions. For example, the number of repetitions of PDCCH transmission indicates that transmission of the Type0-PDCCH is repeated twice, so that the terminal device monitors, on the associated Type0-PDCCH monitoring occasions based on the number of repetitions of PDCCH transmission, the Type0-PDCCH transmitted twice and performs combination. Alternatively, the second information may be the PDCCH aggregation level, so that the terminal device can perform Type0-PDCCH candidate blind detection at the aggregation level indicated by the second information, to improve blind detection efficiency. Alternatively, the second information includes at least two of the PDCCH enhanced switch, the number of repetitions of PDCCH transmission, and the PDCCH aggregation level. For details about the PDCCH enhanced switch, the number of repetitions of PDCCH transmission, and the PDCCH aggregation level, refer to the foregoing related descriptions. Details are not described herein again.

Manner 2: Enhancing the PDCCH based on an intra-slot search space set.

When the PDCCH is not to be enhanced, the terminal device may configure the fourth PDCCH transmission resource for the PDCCH. When the PDCCH is to be enhanced, the terminal device may configure the first PDCCH transmission resource for the PDCCH, and send the first information and the second information to the terminal device, to indicate the first PDCCH transmission resource, and indicate that the first PDCCH transmission resource is used for enhancing the PDCCH. The first PDCCH transmission resource is greater than the fourth PDCCH transmission resource. In other words, in comparison with a case that the PDCCH is not to be enhanced, the network device configures more transmission resources for the PDCCH when the PDCCH is to be enhanced. In other words, the network device extends the PDCCH transmission resource to enhance the PDCCH. In other words, the network device reconfigures a PDCCH transmission resource for the PDCCH. In this manner, the network device may extend the PDCCH transmission resource based on the Type0 CSS set. For example, the network device configures N Type0 CSS sets in a slot, and PDCCH transmission resources corresponding to the N Type0 CSS sets are associated. N is an integer greater than or equal to 2, and N is not greater than a number of symbols in one slot. The first PDCCH transmission resource includes the PDCCH transmission resources corresponding to the N Type0 CSS sets. The N Type0 CSS sets include, for example, a first Type0-PDCCH common search space set and a second Type0-PDCCH common search space set. The first PDCCH transmission resource includes the second PDCCH transmission resource and the third PDCCH transmission resource, where the third PDCCH transmission resource is a resource configured based on the first Type0-PDCCH common search space set, and the second PDCCH transmission resource is a resource configured based on the second Type0-PDCCH common search space set. In other words, the network device reconfigures a number of Type0 CSS sets in the slot to configure the first PDCCH transmission resource, and repeats transmission of the PDCCH on the first PDCCH transmission resource, and/or transmits the PDCCH at a higher aggregation level.

When the PDCCH is not to be enhanced, the terminal device looks up a configuration parameter table (for example, Table 13-11 to 13-15Ain TS 38.213) of a first Type0 CSS set based on the first information (for example, including the four least significant bits of PDCCH-ConfigSIB1) to determine the configuration of the Type0 CSS set. For example, the configuration parameter table of the first Type0 CSS set is shown in Table 1. It may be understood that only a row in Table (Table) 13-11 to 13-15A in TS 38.213 is used as an example herein.

**Table 1: Configuration parameter table of the first Type0 CSS set**

| Index (index) | O | Number of search space sets per slot (number of search space sets per slot) | M | First symbol index (first symbol index) |
|---|---|---|---|---|
| 4 | 5 | 1 | 1 | 0 |

In a possible implementation, when the PDCCH is to be enhanced, a configuration parameter table of a second Type0 CSS set is deployed on the terminal device. Compared with the configuration parameter table of the first Type0 CSS set, a parameter: number of search space sets per slot in the configuration parameter table of the second Type0 CSS set may include more search space sets, in other words, each slot includes more search space sets. Optionally, the configuration parameter table of the second Type0 CSS set further indicates a first symbol of each search space set. In response to the second information, the terminal device looks up the configuration parameter table of the second Type0 CSS set based on the first information, to determine the configuration of the Type0 CSS set. For example, a slot includes N search spaces, and the terminal device associates the N search space sets. For example, the configuration parameter table of the second Type0 CSS set is shown in Table 2. It may be understood that values of the number of search space sets per slot and the first symbol index in Table 2 are used as examples. For example, the value of the number of search space sets per slot may alternatively be 3, 4, 5, 6, or a larger value, first symbol indexes may alternatively be any symbol indexes that are different in time domain, and Type0-PDCCH monitoring occasions corresponding to the first symbol indexes do not overlap with each other. In addition, only one row is listed in Table 2. Actually, there may be more rows in Table 2.

**Table 2: Configuration parameter table of the second Type0 CSS set**

| Index (index) | O | Number of search space sets per slot (number of search space sets per slot) | M | First symbol index (first symbol index) |
|---|---|---|---|---|
| 4 | 5 | 2 | 1 | 0, 7 |

It should be noted that the configuration parameter table of the second Type0 CSS set may be a newly introduced table. Alternatively, the configuration parameter table of the second Type0 CSS set may be obtained by configuring a parameter in a reserved (reserved) row of an existing configuration parameter table of the Type0 CSS set (more search space sets are configured for the number of search space sets per slot, more first symbols are configured for the first symbol index, and the like). This is not limited herein.

In another implementation, the terminal device may not deploy the configuration parameter table of the second Type0 CSS set, but looks up Table 1 based on the first information to obtain a configuration parameter of the Type0 CSS set, and then extends a value of the number of search space sets per slot to N in response to the second information, that is, each slot includes N search space sets, and obtains a first symbol index of each of the N search space sets. Herein, N and the first symbol index of each of the N search space sets may be preset values, or may be calculated according to a preset algorithm. Alternatively, N is a value (the number of repetitions of PDCCH transmission) indicated by the second information. This is not limited herein.

If each slot includes N search space sets, each slot correspondingly includes N PDCCH monitoring occasions, and the terminal device monitors repetitions of the PDCCH on the N PDCCH monitoring occasions, or performs blind detection, at a higher aggregation level, on the PDCCH monitored on the N PDCCH monitoring occasions.

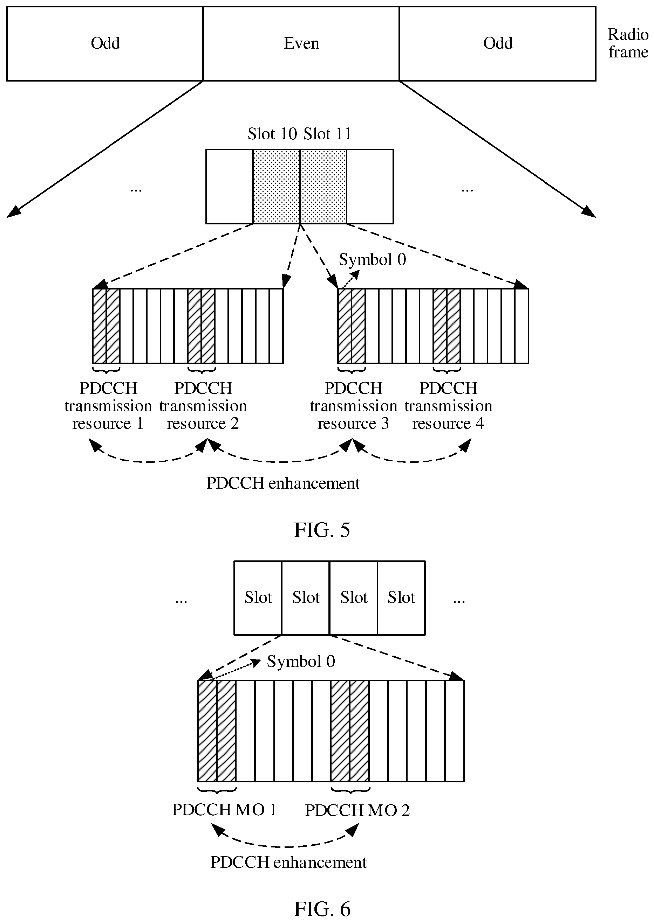

It should be noted that the manner 2 is applicable to SSB/CORESET multiplexing patterns 1, 2, and 3. Optionally, when the SSB/CORESET multiplexing pattern is 1, the manner 1 and the manner 2 may be combined. To be specific, the PDCCH is enhanced not only based on an intra-slot search space set, but also based on associated Type0-PDCCH monitoring occasions between slots. In this case, the first PDCCH transmission resource includes transmission resources corresponding to 2N search space sets. For example, as shown in FIG. 5. In FIG. 5, that one slot includes two search space sets is used as an example. The PDCCH is enhanced, so that the first PDCCH transmission resource includes a PDCCH transmission resource 1 (a resource corresponding to the first Type0 CSS set) and a PDCCH transmission resource 2 (a resource corresponding to the second Type0 CSS set) in a slot 10, and a PDCCH transmission resource 3 (a resource corresponding to the first Type0 CSS set) and a PDCCH transmission resource 4 (a resource corresponding to the second Type0 CSS set) in the slot 10. The PDCCH may be transmitted four times on the PDCCH transmission resources 1 to 4. Certainly, a PDCCH transmission resource in one slot may alternatively be used as a resource pool to send the PDCCH at a higher aggregation level, and transmission of the PDCCH at the higher aggregation level is repeated between slots. This is not limited herein.

In this manner, the second information may be the PDCCH enhanced switch, and the terminal device can determine, based on the second information, that the network device enables to enhance the PDCCH, so that the terminal monitors the repetitions of the PDCCH on the N PDCCH monitoring occasions in the slot and performs combination, or perform PDCCH candidate blind detection at a higher aggregation level. Alternatively, the second information may be the number N of repetitions of PDCCH transmission. The terminal device can determine, based on the second information, that the network device repeats transmission of the PDCCH on the N PDCCH monitoring occasions in the slot, so that the terminal device monitors, based on the number N of repetitions of PDCCH transmission, the Type0-PDCCH transmitted N times on the PDCCH monitoring occasions corresponding to the N search spaces, and performs combination. Alternatively, the second information includes at least two of the PDCCH enhanced switch, the number of repetitions of PDCCH transmission, and the PDCCH aggregation level. For details about the PDCCH enhanced switch, the number of repetitions of PDCCH transmission, and the PDCCH aggregation level, refer to the foregoing related descriptions. Details are not described herein again.

Manner 3: Enhancing the PDCCH based on an inter-frame search space set.

For the SSB/CORESET multiplexing pattern 1, the NR standard specifies that the terminal device monitors the PDCCH on a Type0-PDCCH monitoring occasion in an odd-numbered (odd) frame or an even-numbered frame of each radio frame. In this manner, the network device may configure Type0 CSS set monitoring occasions and corresponding PDCCH transmission resources in two slots in each frame of the radio frame, and the network device sends the second information to the terminal device. The network device associates the Type0-PDCCH monitoring occasion in the odd-numbered frame with the Type0-PDCCH monitoring occasion in the even-numbered frame, in other words, the first PDCCH transmission resource includes transmission resources corresponding to the Type0-PDCCH monitoring occasions in the odd-numbered frame and the even-numbered frame that are adjacent. The Type0-PDCCH monitoring occasion of one of the odd-numbered frame and the even-numbered frame that are adjacent corresponds to the second PDCCH transmission resource, and the Type0-PDCCH monitoring occasion of the other one corresponds to the third PDCCH transmission resource. The network device repeats transmission of the PDCCH on the second PDCCH transmission resource and the third PDCCH transmission resource, and/or sends the PDCCH on the first PDCCH transmission resource at a higher aggregation level. Correspondingly, in response to the second information, the terminal device monitors repetitions of the PDCCH in the adjacent radio frames, and/or performs PDCCH blind detection at the higher aggregation level.

In this manner, the second information may include at least one of the PDCCH enhanced switch, the number of repetitions of PDCCH transmission, and the PDCCH aggregation level. For details about the PDCCH enhanced switch, the number of repetitions of PDCCH transmission, and the PDCCH aggregation level, refer to the foregoing related descriptions. Details are not described herein again.

Manner 4: Enhancing the PDCCH (extending a resource size of the CORESETO) based on the CORESET.

When the PDCCH is not to be enhanced, the terminal device may configure the fourth PDCCH transmission resource for the PDCCH. When the PDCCH is to be enhanced, the terminal device may configure the first PDCCH transmission resource for the PDCCH, and send the first information and the second information to the terminal device, to indicate the first PDCCH transmission resource, and indicate that the first PDCCH transmission resource is used for enhancing the PDCCH. The first PDCCH transmission resource is greater than the fourth PDCCH transmission resource. In other words, in comparison with a case that the PDCCH is not to be enhanced, the network device configures more transmission resources for the PDCCH when the PDCCH is to be enhanced. In other words, the network device extends the PDCCH transmission resource to enhance the PDCCH. In other words, the network device reconfigures a PDCCH transmission resource for the PDCCH. In this manner, the network device may extend the PDCCH transmission resource based on the CORESETO. In other words, the network device configures, based on the CORESETO, the transmission resource for enhancing the PDCCH. For example, the network device configures more resource blocks in frequency domain, configures more symbols in time domain, or configures more resource blocks in frequency domain and more symbols in time domain, to extend the resource size of the CORESETO. Alternatively, the network device reconfigures the CORESETO to configure the first PDCCH transmission resource, and repeats transmission of the PDCCH on the first PDCCH transmission resource, and/or transmits the PDCCH at a higher aggregation level.

When the PDCCH is not to be enhanced, the terminal device looks up a configuration parameter table (for example, Table 13-11 to 13-15Ain TS 38.213) of a first Type0 CSS set based on the first information (for example, including the four least significant bits of PDCCH-ConfigSIB1) to determine the configuration of the Type0 CSS set. For example, the configuration parameter table of the first Type0 CSS set is shown in Table 1. It may be understood that only a row in Table 13-1 to Table 13-10A in TS 38.213 is used as an example herein.

When the PDCCH is not to be enhanced, the terminal device determines a configuration of a first CORESETO through table lookup based on the four most significant bits of the parameter PDCCH-ConfigSIB 1. For example, the first CORESETO is shown in Table 3. It may be understood that the parameters in the first CORESETO are merely used as examples, and should not be understood as limitations on this application.

**Table 3: Configuration parameter table of the first CORESETO**

| Index (index) | SSB/CORESET multiplexing pattern | Number of resource blocks (number of RBs, ${N}_{RB}^{CORESET}$) | Number of symbols (number of symbols, ${N}_{symbol}^{CORESET}$ ) | Offset (resource block) |
|---|---|---|---|---|
| 0 | 1 | 24 | 2 | 0 |

When the PDCCH is to be enhanced, in response to the second information, the terminal device determines a configuration of a second CORESETO through table lookup based on the four most significant bits of the parameter PDCCH-ConfigSIB1. An example is shown in Table 4.

**Table 4: Configuration parameter table of the second CORESETO**

| Index (index) | SSB/CORESET multiplexing pattern | Number of resource blocks (number of RBs, ${N}_{RB}^{CORESET}$) | Number of symbols (number of symbols, ${N}_{symbol}^{CORESET}$ ) | Offset (resource block) |
|---|---|---|---|---|
| 0 | 1 | 48 | 2 | 0 |

Alternatively, as shown in Table 5.

**Table 5: Configuration parameter table of the second CORESETO**

| Index (index) | SSB/CORESET multiplexing pattern | Number of resource blocks (number of RBs, ${N}_{RB}^{CORESET}$) | Number of symbols (number of symbols, ${N}_{symbol}^{CORESET}$ ) | Offset (resource block) |
|---|---|---|---|---|
| 0 | 1 | 24 | 3 | 0 |

Alternatively, as shown in Table 6.

**Table 6: Configuration parameter table of the second CORESETO**

| Index (index) | SSB/CORESET multiplexing pattern | Number of resource blocks (number of RBs, ${N}_{RB}^{CORESET}$) | Number of symbols (number of symbols, ${N}_{symbol}^{CORESET}$ ) | Offset (resource block) |
|---|---|---|---|---|
| 0 | 1 | 48 | 3 | 0 |

To be specific, only the frequency domain resource of the CORESETO may be extended (Table 4), only the number of consecutive symbols of the CORESETO in time domain may be extended (Table 5), or both the frequency domain resource of the CORESETO and the number of consecutive symbols of the CORESETO in time domain may be extended (Table 6). It may be understood that the values of the parameters in the second CORESETO shown in Table 4 to Table 6 are merely used as examples, indicate only the CORESETO resource extension manners, and should not be understood as limitations on this application. In addition, only one row is listed in Table 4 to Table 6. Actually, there may be more rows in Table 4 to Table 6. It should be noted that the manner 4 is applicable to SSB/CORESET multiplexing patterns 1, 2, and 3.

It should be noted that the configuration parameter table of the second CORESETO may be a newly introduced table. Alternatively, the configuration parameter table of the second CORESETO may be obtained by configuring a parameter in a reserved row of an existing configuration parameter table of the CORESETO (more RBs are configured, more symbols are configured, or the like). This is not limited herein.

In another implementation, the terminal device may alternatively not deploy the configuration parameter table of the second CORESETO, but looks up Table 3 based on the first information to obtain the configuration parameter of the CORESETO, and then determines, in response to the second information, more RBs and/or more symbols based on the configuration parameter that is of the CORESETO and that is obtained in Table 3. A number of extended RBs and/or a number of extended symbols may be preset values/a preset value, may be calculated according to a preset algorithm, or may be indicated by the second information (for example, the second information includes the parameter: number of repetitions of PDCCH transmission). This is not limited herein.

A CORESETO with a larger resource size is configured, so that the first PDCCH transmission resource has a larger transmission resource than the fourth PDCCH transmission resource. The network device repeats transmission of the PDCCH on the first PDCCH transmission resource, and/or transmits the PDCCH at a higher aggregation level, so that the terminal device can monitor repetitions of the PDCCH on the first PDCCH transmission resource, and/or perform PDCCH blind detection at a higher aggregation level.

In this manner, the first PDCCH transmission resource includes the second PDCCH transmission resource and the third PDCCH transmission resource, and the second PDCCH transmission resource and the third PDCCH transmission resource are resources in a resource configured based on the same CORESETO and the same Type0 CSS set. Optionally, the second information further indicates that the second PDCCH transmission resource and the third PDCCH transmission resource in the first PDCCH transmission resource are associated, so that the terminal device monitors, based on the second information, repetitions of the PDCCH on the second PDCCH transmission resource and the third PDCCH transmission resource.

In this manner, the second information may include at least one of the PDCCH enhanced switch, the number of repetitions of PDCCH transmission, and the PDCCH aggregation level. For details about the PDCCH enhanced switch, the number of repetitions of PDCCH transmission, and the PDCCH aggregation level, refer to the foregoing related descriptions. Details are not described herein again.

Manner 5: Enhancing the PDCCH based on an idle resource in the CORESET.

When a resource size configured for the CORESETO is greater than a resource size actually occupied by the PDCCH, in other words, there is an idle resource in the fourth PDCCH transmission resource, the network device may enhance the PDCCH by using the idle resource. In other words, the network device may repeat transmission of the PDCCH on the idle resource, or transmit the PDCCH at a higher aggregation level on the fourth PDCCH transmission resource. In addition, the network device sends the second information to the terminal device.

The second information indicates to repeat transmission of the PDCCH on the first PDCCH transmission resource, and/or transmit the PDCCH at a higher aggregation level, so that the PDCCH occupies the entire first PDCCH transmission resource (the PDCCH is transmitted by using all resources in the first PDCCH transmission resource). The terminal device determines the first PDCCH transmission resource (namely, the fourth PDCCH transmission resource) based on the first information, and monitors repetitions of the PDCCH on the first PDCCH transmission resource, or performs PDCCH blind detection at a higher aggregation level based on the second information. Therefore, resource utilization can be improved, and PDCCH performance can be improved.

In this manner, the second information may include at least one of the PDCCH enhanced switch, the number of repetitions of PDCCH transmission, and the PDCCH aggregation level. For details about the PDCCH enhanced switch, the number of repetitions of PDCCH transmission, and the PDCCH aggregation level, refer to the foregoing related descriptions. Details are not described herein again.

Manner 6: Enhancing the PDCCH based on a PDCCH transmission resource corresponding to an SSB in repeated transmission.

The SSB carries the configuration information of the PDCCH (PDCCH-configSIB1 in the MIB). When the SSB is in repeated transmission, payloads of the SSBs in repeated transmission are the same. In this case, the SSBs in repeated transmission carry the same configuration information of the PDCCH. In addition, because indexes of the SSBs in repeated transmission are also the same, the terminal device determines a same Type0-PDCCH monitoring occasion, in other words, determines a same PDCCH transmission resource based on the configuration information of the PDCCH in different SSBs in repeated transmission. A PDCCH transmission resource indicated in the SSB is used for scheduling a SIB1. The different SSBs in repeated transmission may correspond to different PDCCH transmission resources. One SSB corresponds to one PDCCH transmission resource. The different PDCCH transmission resources are used for scheduling the same SIB1. However, the terminal device can only correspond, to the same Type0-PDCCH monitoring occasion, the different SSBs in repeated transmission.

In this manner, the different SSBs in repeated transmission correspond to the different PDCCH transmission resources. The network device may associate the PDCCH transmission resources corresponding to the SSBs in repeated transmission, to repeat transmission of the Type0-PDCCH on the associated PDCCH transmission resources. The network device may further send the second information to the terminal device. The terminal device may associate, based on the second information, the different PDCCH transmission resources corresponding to the different SSBs in repeated transmission, to receive, on the associated PDCCH transmission resources, repetitions of transmission of the Type0-PDCCH. The first PDCCH transmission resource includes, for example, PDCCH transmission resources corresponding to the SSBs in repeated transmission. It should be noted that, that the different PDCCH transmission resources corresponding to the different SSBs in repeated transmission are PDCCH transmission resources that correspond to the different SSBs in repeated transmission and that have a same size in time domain, for example, have same consecutive symbols and resource blocks.

In this manner, the terminal device may determine, based on an offset value, the different PDCCH transmission resources corresponding to the different SSBs in repeated transmission.

Optionally, the second information may indicate the offset value. The offset value may be a symbol offset value, a slot offset value, or interval duration. The offset value indicates a time interval between adjacent PDCCH transmission resources in time domain in the associated PDCCH transmission resources. Therefore, even if the SSBs in repeated transmission carry the same configuration information of the PDCCH, and the indexes of the SSBs in repeated transmission are the same, the terminal device can also determine, based on the second information, a time domain position of a PDCCH transmission resource corresponding to the SSB in each repeated transmission. For example, based on the configuration information that is of the PDCCH and that is carried in the SSB, a time domain position (for example, a Type0-PDCCH monitoring occasion 1) of a PDCCH transmission resource corresponding to a 1^{st} time of transmission in the SSBs in repeated transmission may be determined, a time domain position of a PDCCH transmission resource corresponding to a 2^{nd} time of transmission in the SSBs in repeated transmission is a Type0-PDCCH monitoring occasion 1+an offset value, and a time domain position of a PDCCH transmission resource corresponding to a 3^{rd} time of transmission in the SSBs in repeated transmission is a Type0-PDCCH monitoring occasion 1+2*an offset value. The rest can be deduced by analogy. The second information may be 2 bits. For example, 00 indicates that the PDCCH is not to be enhanced, 01 indicates that the offset value is 10 milliseconds (ms), 10 indicates that the offset value is 20 ms, and 11 indicates that the offset value is 30 ms. It may be understood that the offset values indicated by the second information herein are merely used as examples, and should not be understood as limitations on this application. In addition, the second information may alternatively indicate a symbol offset value or a slot offset value. For example, 01 may alternatively indicate 20 ms, 40 ms, or the like; indicate 14 symbols or 28 symbols; or indicate one slot or two slots.

Optionally, the second information may indicate the PDCCH enhanced switch or the number of repetitions of PDCCH transmission. For details about the PDCCH enhanced switch and the number of repetitions of PDCCH transmission, refer to the foregoing related descriptions. Details are not described herein again. When the second information indicates to enhance the PDCCH, the terminal device may obtain the offset value, and determine, based on the offset value, the PDCCH transmission resources corresponding to the different SSBs in repeated transmission. In an implementation, in this case, the offset value may be preset, in other words, the offset value is preconfigured on the terminal device. In other words, when the second information indicates to enhance the PDCCH, the terminal device may determine that an interval between PDCCH transmission resources that are adjacent in time domain in the PDCCH transmission resources corresponding to the different SSBs in repeated transmission is the offset value. In another implementation, the offset value may be determined based on a time interval between SSBs that are adjacent in time domain in the SSBs in repeated transmission. For example, the offset value is equal to the time interval.

Optionally, the offset value between the PDCCH transmission resources corresponding to the SSBs in repeated transmission may alternatively not be indicated by using the second information. For example, when determining that the network device enhances the PDCCH based on the PDCCH transmission resources corresponding to the SSBs in repeated transmission (determines that transmission of the SSB is repeated and the condition for enhancing the PDCCH is satisfied), the terminal device obtains the offset value by using Table 7. Because the SSBs in repeated transmission carry the same configuration information of the PDCCH, a same row in a same table may be determined based on the configuration information that is of the PDCCH and that is carried in the SSBs in repeated transmission. The terminal device determines, based on a specific time of transmission of a current SSB in the SSBs in repeated transmission, a time domain position of a PDCCH transmission resource corresponding to the current SSB.

**Table 7: Configuration parameter table of the Type0 CSS set**

| Index (index) | O | Number of search space sets per slot (number of search space sets per slot) | M | First symbol index (first symbol index) | Offset value (ms) |
|---|---|---|---|---|---|
| 4 | 5 | 1 | 1 | 0 | 10 |

It may be understood that the parameter values in Table 7 are merely examples, and Table 7 lists only one row. Actually, Table 7 may have more rows. This should not be understood as limitations on this application. In Table 7, an example in which the offset value is interval duration is used. It may be understood that the offset value may alternatively be a symbol offset value, a slot offset value, or the like. This is not limited herein.

In comparison with Table 1, a column is added to Table 7. Certainly, the offset value may be indicated without adding the "offset value" column based on Table 1. When the terminal device determines that the network device enhances the PDCCH based on the PDCCH transmission resources corresponding to the SSBs in repeated transmission, the terminal device calculates, according to a preset algorithm, PDCCH monitoring occasions corresponding to the PDCCH transmission resources. The preset algorithm includes a preset offset value, and an input parameter of the preset algorithm may include a repetition sequence number of a current SSB (that is, a specific time of transmission of the SSB in the SSBs in repeated transmission), so that a PDCCH transmission resource corresponding to the current SSB can be obtained according to the preset algorithm. In comparison with an offset, in time domain, of a PDCCH transmission resource corresponding to an SSB transmitted the 1^{st} time in the SSBs in repeated transmission, the PDCCH transmission resources corresponding to the different SSBs in repeated transmission are accurately determined, to monitor repetitions of the transmitted Type0-PDCCH on the corresponding PDCCH transmission resources.

It should be noted that at least two of the foregoing manner 1 to manner 6 may be combined with each other. For example, the manner 1 and the manner 2 are combined, the manner 2 and the manner 4 are combined, the manner 1 and the manner 6 are combined, the manner 2 and the manner 3 are combined, the manner 3 and the manner 5 are combined, the manner 4 and the manner 5 are combined, the manner 1, the manner 2, and the manner 3 are combined, the manner 1, the manner 3, and the manner 4 are combined, or the like. Examples are not listed one by one herein.

For example, that the manner 1 and the manner 4 are combined is used as an example for description. It is assumed that when the PDCCH is not to be enhanced, the network device configures a CORESETO with a size of 48 RBs (for example, ${N}_{RB}^{CORESET} = 24 , {N}_{symbol}^{CORESET} = 2$) for the PDCCH, and an PDCCH aggregation level is 8. When the PDCCH is to be enhanced, the network device configures a CORESETO with a larger resource (for example, ${N}_{RB}^{CORESET} = 48 , {N}_{symbol}^{CORESET} = 2$) for the PDCCH, and enhances the PDCCH by using a first Type0-PDCCH monitoring occasion and a second Type0-PDCCH monitoring occasion. Resource sizes respectively corresponding to the first Type0-PDCCH monitoring occasion and the second Type0-PDCCH monitoring occasion are 96 RBs. The network device may send the PDCCH twice on the first Type0-PDCCH monitoring occasion, and send the PDCCH twice on the second Type0-PDCCH monitoring occasion, where an PDCCH aggregation level is 8. Alternatively, the network device may send the PDCCH once on the first Type0-PDCCH monitoring occasion, and send the PDCCH once on the second Type0-PDCCH monitoring occasion, where an PDCCH aggregation level is 16.

For example, that the manner 2 and the manner 5 are combined is used as an example for description. It is assumed that when the PDCCH is not to be enhanced, the network device configures a CORESETO with a size of 48 RBs (for example, ${N}_{RB}^{CORESET} = 24 , {N}_{symbol}^{CORESET} = 2$) for the PDCCH, a number of Type0 CSS sets in a slot is 1, an PDCCH aggregation level is 8, 24 RBs are actually used for transmission of the PDCCH, and a size of an idle resource is 24 RBs. When the PDCCH is to be enhanced, the network device configures a CORESETO with a size of 48 RBs (for example, ${N}_{RB}^{CORESET} = 24 , {N}_{symbol}^{CORESET} = 2$) for the PDCCH, a number of Type0 CSS sets in a slot is 2, and two Type0 CSS sets (for example, a first Type0 CSS set and a second Type0 CSS set) in the slot are associated. A resource size of the second PDCCH transmission resource (a resource configured based on the second Type0 CSS set and the CORESET) is 48 RBs, and a resource size of the second PDCCH transmission resource (a resource configured based on the first Type0 CSS set and the CORESET) is 48 RBs. The network device may send the PDCCH twice on the second PDCCH transmission resource (24 RBs are used for each PDCCH transmission), and send the PDCCH twice on the third PDCCH transmission resource (24 RBs are used for each PDCCH transmission). A PDCCH aggregation level is 8, that is, the PDCCH is transmitted four times in total. Alternatively, the network device may send the PDCCH once on the second PDCCH transmission resource at an aggregation level 16, and send the PDCCH once on the third PDCCH transmission resource at the aggregation level 16, that is, the PDCCH is transmitted twice in total.

In the manner 1 to the manner 6, the network device sends the second information in a plurality of manners. In an implementation, the second information may be carried in a MIB message. For example, the second information may be carried in 1-bit spare (spare) bit in the MIB message. For another example, in a frequency range (frequency range, FR)1 frequency band, there are two reserved bits in eight additional bits (bits) of a PBCH payload, and the second information may be carried in any bit of the two reserved bits, or carried on the two reserved bits. For still another example, when a PDCCH subcarrier spacing (subcarrier spacing, SCS) (or a common subcarrier spacing (SubCarrierSpacingCommon) in the MIB) indicates 15 kHz in an FR1 frequency band, a boundary offset value (Kssb) of a synchronization broadcast block subcarrier offset includes one unused bit, and the second information may be carried in the bit. This is because the NR standard specifies that for the FR1, for SSB typeA, numerology: {µ = 0,1}, SSB SCS=15 kHz or 30 kHz, and a value of Kssb needs to be determined based on five bits, where a most significant bit MSB is from a 6^{th} bit (*a̅*_{*A̅*+5} *in TS* 38.211) of the 8 bits of the PBCH payload, and remaining four LSBs are from a ssb-SubcarrierOffset field in the MIB. During actual configuration, when a PDCCH SCS is 30 kHz, Kssb needs to be determined based on 5 bits, while when the PDCCH SCS is 15 kHz, Kssb is determined based on 4 bits. Therefore, when the FR1 frequency band indicates 15 kHz, Kssb includes one unused bit. Certainly, a new parameter may alternatively be added to the MIB message to carry the second information. This is not limited herein. When the second information needs to be carried by more bits, at least two of the 1-bit spare bit in the MIB message, the two reserved bits in the eight additional bits of the PBCH payload, and the one unused bit in Kssb when the FR1 frequency band indicates 15 kHz, may be used for carrying the second information.

### 2. Enhancing the PDCCH outside the Type0 CSS set.

For a configuration of a common search space of another type (Type0A/0B/1/1A/2/2A CSS set, or the like), after decoding a SIB1 message, the terminal device obtains a PDCCH-ConfigCommon→SearchSpace configuration from RRC signaling. The configuration is a list, including configurations of a plurality of search space sets. Each configuration has a different search space type, a corresponding DCI format, an included PDCCH candidate aggregation level, a number of PDCCH candidates, and the like. For the Type3 CSS set and the USS set, after decoding a SIB1 message, the terminal device obtains a PDCCH-Config→SearchSpace configuration from RRC signaling, where the PDCCH-Config→SearchSpace configuration includes configurations of a plurality of search space sets. Each configuration has a different search space type (type), a corresponding DCI format, an included PDCCH candidate aggregation level, a number of PDCCH candidates, and the like.

For example, the first information includes SearchSpace in PDCCH-ConfigCommon, or SearchSpace in PDCCH-Config. The first information may further include configuration information of the CORESET.

Manner 7: Enhancing the PDCCH based on an intra-slot monitoring occasion.

In an implementation, the network device indicates, to the terminal device by using the second information, that PDCCH resources configured in a corresponding search space set (Type0A/0B/1/1A/2/2A/3 CSS set, or USS set) may be associated, that is, M PDCCH monitoring occasions in a same slot may be associated, and a PDCCH transmission resource corresponding to the associated M PDCCH monitoring occasions is the first PDCCH transmission resource, so that the network device enhances the PDCCH on the first PDCCH transmission resource. The M PDCCH monitoring occasions include, for example, a first PDCCH monitoring occasion and a second PDCCH monitoring occasion, a transmission resource corresponding to the first PDCCH monitoring occasion is the third PDCCH transmission resource, and a transmission resource corresponding to the second PDCCH monitoring occasion is the second PDCCH transmission resource. The terminal device determines the first PDCCH transmission resource based on the second information, associates the second PDCCH transmission resource with the third PDCCH transmission resource, monitors repetitions of the PDCCH on the second PDCCH transmission resource and the third PDCCH transmission resource, and/or performs PDCCH blind detection on the first PDCCH transmission resource at a higher aggregation level. M is an integer greater than or equal to 2.

For example, as shown in FIG. 6, a Type0A/0B/1/1A/2/2A CSS set and two PDCCH MOs are used as an example. An information element SearchSpace→monitoringSymbolsWithinSlot=10000001000000 may be configured, to indicate that first symbols (0 and 7) of two groups of PDCCH monitoring occasions are configured in a slot. When the CORESETO occupies two OFDM symbols, it indicates that a network side configures two PDCCH monitoring occasions (or PDCCH transmission resources) in one slot by using the SearchSpace parameter, where the two PDCCH monitoring occasions are, for example, a PDCCH MO 1 and a PDCCH MO 2, the PDCCH MO 1 is OFDM symbols 0 and 1, and the PDCCH MO 2 is OFDM symbols 7 and 8. PDCCH transmission resources corresponding to a plurality of PDCCH monitoring occasions included in the CSS set may be associated by using the second information (to obtain the first PDCCH transmission resource), and transmission of the PDCCH is repeated on the associated PDCCH resources, and/or the PDCCH is transmitted at a higher aggregation level. Correspondingly, the terminal device determines, based on the second information, that a plurality of monitoring occasions in a slot are associated, monitors repetitions of the PDCCH on the PDCCH transmission resources (the first PDCCH transmission resource) corresponding to the plurality of PDCCH monitoring occasions, and/or performs PDCCH blind detection at a higher aggregation level. It may be understood that the first symbols of the PDCCH monitoring occasions herein are merely used as examples, and should not be understood as limitations on this application. The first symbols may alternatively be other symbols. For example, the first symbols may alternatively be 0 and 4, or 0 and 8. This is not limited herein.

Manner 8: Enhancing the PDCCH based on the CORESET.

For a PDCCH in a Type 0A/0B/1/1A/2/2A/3 CSS set or a USS set, a PDCCH transmission resource may alternatively be extended by reconfiguring associated CORESETs. For example, a time domain resource (a number of symbols) and/or a frequency domain resource (a number of resource blocks) in the associated CORESETs may be increased, to obtain the first PDCCH transmission resource. In this way, the network device sends the first information and the second information to the terminal device, to indicate the first PDCCH transmission resource, and associate the second PDCCH transmission resource with the third PDCCH transmission resource in the first PDCCH transmission resource, to enhance the PDCCH. In response to the second information, the terminal device monitors repetitions of the PDCCH on the first PDCCH transmission resource, or performs PDCCH blind detection at a higher aggregation level.

Manner 9: Enhancing the PDCCH based on an idle resource in the CORESET.

When a resource size configured for the CORESET is greater than a resource size actually occupied by the PDCCH, in other words, there is an idle resource in the fourth PDCCH transmission resource, the network device may enhance the PDCCH by using the idle resource. In other words, the network device may repeat transmission of the PDCCH on the idle resource, or transmit the PDCCH at a higher aggregation level on the fourth PDCCH transmission resource. In addition, the network device sends the second information to the terminal device.

The second information indicates to repeat transmission of the PDCCH on the first PDCCH transmission resource, and/or transmit the PDCCH at a higher aggregation level, so that the PDCCH occupies the entire first PDCCH transmission resource (the PDCCH is transmitted by using all resources in the first PDCCH transmission resource). The terminal device determines the first PDCCH transmission resource (namely, the fourth PDCCH transmission resource) based on the first information, and monitors repetitions of the PDCCH on the first PDCCH transmission resource, or performs PDCCH blind detection at a higher aggregation level based on the second information. Therefore, resource utilization can be improved, and PDCCH performance can be improved.

In the manner 7 to the manner 9, the network device sends the second information in a plurality of manners. In an implementation, the second information may be carried in a MIB message. For example, the second information may be carried in 1-bit spare (spare) bit in the MIB message. For another example, in an FR1 frequency band, there are two reserved bits in eight additional bits (bits) of a PBCH payload, and the second information may be carried on any bit of the two reserved bits, or carried on the two reserved bits. For still another example, when a PDCCH SCS (or SubCarrierSpacingCommon in the MIB) indicates 15 kHz in an FR1 frequency band, a boundary offset value (Kssb) of a synchronization broadcast block subcarrier offset includes one unused bit, and the second information may be carried in the bit. Certainly, a new parameter may alternatively be added to the MIB message to carry the second information. This is not limited herein. When the second information needs to be carried by more bits, at least two of the 1-bit spare bit in the MIB message, the two reserved bits in the eight additional bits of the PBCH payload, and the one unused bit in Kssb when the FR1 frequency band indicates 15 kHz, may be used for carrying the second information.

In another implementation, the second information may alternatively be carried in RRC signaling. For example, a new higher-layer parameter may be introduced in a SIB1, and occupied overheads may be 1 bit, 2 bits, 3 bits, or more.

In another implementation, the second information may be carried in DCI. For example, for a Type0-PDCCH not used for scheduling a SIB1, for example, in a random access channel (random access channel, RACH) phase, a downlink control channel (PDCCH) that schedules a Msg2, Msg3, Msg4, Msg5, or the like may be a Type0A/0B/1/1A/2/2A PDCCH. For sending of the Type0A/0B/1/1A/2/2A PDCCH, a plurality of pieces of signaling have been exchanged between the terminal and the network side. The network device uses some bits in DCI for scheduling the Msg2, to be specific, some reserved bits (there are 16 reserved bits in the DCI in a protocol) in a DCI format 1_0 scrambled by an RA-RNTI to carry the second information, to indicate, to the terminal device, to enhance a PDCCH in a subsequent common search space. Optionally, the second information may occupy a plurality of bits, and each bit indicates to enhance one type of PDCCH in a Type0A/0B/1/1A/2/2A PDCCH in a subsequent downlink channel. Different bits in the plurality of bits may indicate to enhance different types of PDCCHs. The plurality of bits are, for example, 2 bits, 3 bits, 4 bits, or more bits. For example, 3 bits are used as an example. One of the 3 bits may indicate to enhance the Type0A PDCCH in all subsequent downlink channels, one of the 3 bits may indicate to enhance the Type1 PDCCH in all the subsequent downlink channels, and one of the 3 bits may indicate to enhance the Type2 PDCCH in all the subsequent downlink channels. Certainly, the second information may alternatively be 1 bit, indicating to enhance one type of PDCCH in the Type0A/0B/1/1A/2/2A PDCCH.

For another example, in addition to using the reserved bits in the DCI for scheduling the Msg2 to carry the second information, other DCI may be used for carrying the second information. An idle bit in a RAR UL grant for scheduling initial transmission of the Msg3 is used for carrying the second information. Alternatively, some fields in DCI for scheduling the Msg3 or the Msg4 are re-interpreted. For example, an MCS field in the DCI has 5 bits, and two of the 5 bits may carry the second information.

Manner 10: Enhancing the PDCCH based on search space sets associated with different CORESETs.

After decoding the SIB message, the terminal device obtains an RRC higher-layer parameter PDCCH-ConfigCommon, namely, a cell-level PDCCH resource configuration, from the SIB. The parameter includes a commonControlResourceSet information element, used for providing an additional CORESET configuration other than the CORESET0 for the terminal.

Each CORESET configured for the terminal device corresponds to a different search space set, including respective PDCCH candidate configurations (aggregation levels and numbers of PDCCH candidates).

In this manner, a new parameter may be introduced into the SIB message, to enable association between a plurality of CORESETs, and association between PDCCH candidates in different SS sets (a search space type is not limited) corresponding to the plurality of CORESETs. In other words, the first PDCCH transmission resource includes resources configured based on a plurality of associated search space sets. The plurality of associated CORESETs include, for example, a first CORESET and a second CORESET. The plurality of associated search space sets include, for example, a first SS set and a second SS set. The first SS set is associated with the first CORESET, and the second SS set is associated with the second CORESET. The first PDCCH transmission resource includes the second PDCCH transmission resource and the third PDCCH transmission resource, the third PDCCH transmission resource is a resource configured based on the first CORESET and the first SS set, and the second PDCCH transmission resource is a resource configured based on the second CORESET and the second SS set. Therefore, flexibility of configuring the first PDCCH transmission resource by the network device can be improved. When the PDCCH is to be enhanced, the network device repeats sending the PDCCH in associated PDCCH candidates corresponding to the second PDCCH transmission resource and the third PDCCH transmission resource, or sends the PDCCH at a higher aggregation level.

In a possible implementation, a new information element may be introduced into the SIB message, and the new information element indicates associated CORESET indexes and corresponding associated SearchSpace indexes. Optionally, the new information element is, for example, "linked_CoresetIndexes_SearchSpaceIndexes". In this manner, the second information includes the new information element.

When PDCCH candidate aggregation levels in a plurality of configured SS sets and numbers of candidates at each aggregation level are correspondingly the same, in the foregoing information element configuration, corresponding PDCCH candidates in each SS set are associated by default (for example, PDCCH candidates whose indexes are 1 in each SS set are associated, and has a same aggregation level and a same number). When PDCCH candidate aggregation levels in a plurality of configured SS sets and numbers of PDCCH candidates at each aggregation level are different, in addition to the foregoing information element configuration, indexes of PDCCH candidates that are specifically associated in associated SS sets may be indicated.

Therefore, after receiving the second information, the terminal device determines the associated search space set and the associated PDCCH candidates, so that the terminal device can monitor repetitions of the PDCCH on the associated PDCCH candidates, or perform PDCCH candidate blind detection at a higher aggregation level.

It should be noted that at least two of the foregoing manner 7 to manner 10 may be combined. For example, the manner 7 may be combined with at least one of the manner 8, the manner 9, and the manner 10, the manner 8 may be combined with at least one of the manner 7, the manner 9, and the manner 10, the manner 9 may be combined with at least one of the manner 7, the manner 8, and the manner 10, or the manner 10 may be combined with at least one of the manner 7, the manner 8, and the manner 9.

It may be understood that the manner 1 to the manner 5 and the manner 7 to the manner 10 are for PDCCHs in different types of search spaces, and the manner 1 to the manner 5 do not conflict with the manner 7 to the manner 10.

S303: The network device sends the PDCCH on a first PDCCH resource. Correspondingly, the terminal device monitors the PDCCH on the first PDCCH resource.

The network device repeats sending the PDCCH on the first PDCCH resource, and/or sends the PDCCH at a higher aggregation level. Correspondingly, the terminal device monitors repetitions of the PDCCH on the first PDCCH resource, and/or performs PDCCH blind detection at the higher aggregation level.

In this embodiment, the Type0/0A/0B/1/1A/2/2A PDCCH is enhanced by extending the PDCCH transmission resource or using the idle resource, to improve performance and a coverage capability of the Type0/0A/0B/1/1A/2/2A PDCCH, so as to improve a success rate of decoding the Type0/0A/0B/1/1A/2/2A PDCCH by the terminal device. For a Type3-PDCCH or a PDCCH of a UE-specific search space, this solution can enhance the PDCCH by increasing a number of repetitions of transmission of the PDCCH to make the number of repetitions of transmission of the PDCCH be greater than or equal to 3, by increasing an aggregation level of the PDCCH, by using different monitoring occasions of a search space, or by using an extended or idle resource of a CORESET, to further improve performance and coverage capability of the Type3-PDCCH or the PDCCH of the UE-specific search space. For example, in an NTN scenario, a success rate of decoding a PDCCH by a terminal device of an edge beam or a cell can be improved, and a coverage capability of the PDCCH in the NTN scenario can be improved. In a non-NTN scenario, this solution can also improve a coverage capability and performance of a PDCCH at a cell edge or a PDCCH of an edge beam, and improve a success rate of decoding the PDCCH by a terminal device at the cell edge.

In the solution described in S301 to S303, an example in which the network device sends the second information to the terminal device to indicate to enhance the PDCCH is used for description. In the following scenario, the network device may alternatively not indicate, to the terminal device by using the second information, to enhance the PDCCH; and when a condition is satisfied, the terminal device enables to enhance the PDCCH, that is, determines a first PDCCH transmission resource, monitors repetitions of the PDCCH on the first PDCCH transmission resource, and/or performs PDCCH blind detection at a higher aggregation level. Therefore, signaling overheads can be reduced. In a possible implementation, when the terminal device communicates with the network device in an NTN frequency band, the network device enhances the PDCCH and does not send the second information to the network device; and the terminal device determines that the NTN frequency band is currently used for communicating with the network device, determines the first PDCCH transmission resource based on the first information, monitors repetitions of the PDCCH on the first PDCCH transmission resource, and/or performs PDCCH blind detection at a higher aggregation level.

In another implementation, the terminal device has sent third information to the network device, where the third information is used for requesting the network device to enhance the PDCCH, or the third information is used for reporting to the network device that the terminal device has a PDCCH enhancement processing capability. The network device enhances the PDCCH in response to the third information, without sending the second information to the terminal device. After sending the third information, the terminal device determines the first PDCCH transmission resource based on the first information, monitors repetitions of the PDCCH on the first PDCCH transmission resource, and/or performs PDCCH blind detection at a higher aggregation level. The third information may be reported by using a Msg1. For example, the network device configures PRACH resource grouping in a SIB message, for example, groups PRACH resources into four groups. If the terminal sends the Msg1 by using a first group of PRACH resources, it indicates that the terminal does not request/report a capability (for PDCCH repetitions); or if the terminal sends the Msg1 by using a second group of PRACH resources, it indicates that the terminal requests two PDCCH repetitions, or reports a capability of supporting two PDCCH repetitions. Alternatively, the third information may be reported by using Msg3 higher layer signaling. For example, when the terminal device sends a Msg3, when an LCDI field in a MAC subheader is 34, the subheader may have an additional eLCID field. The field includes 289 reserved codepoints, and one or more of the codepoints may be used for carrying the third information; or one or both of two "R" bits (reserved bits) in the Msg3 MAC subheader is/are directly used for carrying the third information.

Certainly, in these scenarios (the terminal device communicates with the network device in the NTN frequency band, and the terminal device has sent the third information to the network device), the network device may also send the second information to the terminal device. This is not limited herein.

The following describes, with reference to the accompanying drawings, communication apparatuses for implementing the foregoing method in embodiments of this application.

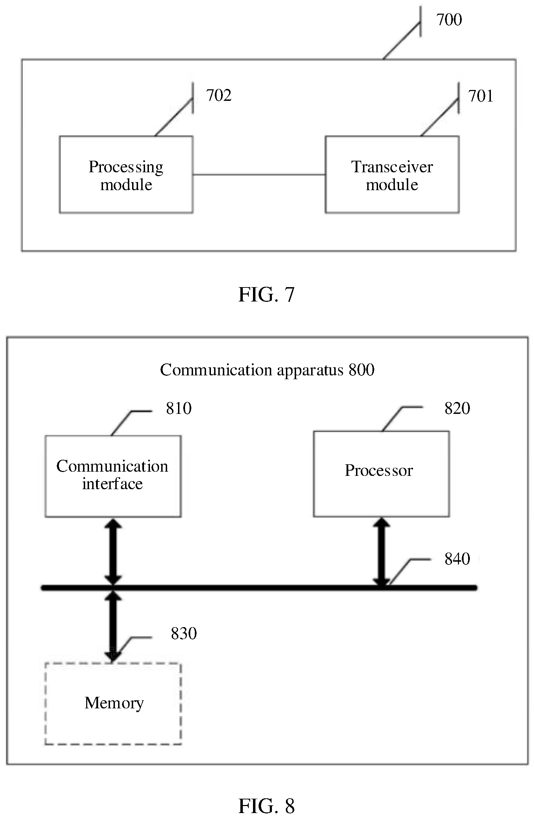

FIG. 7 is a possible example block diagram of a communication apparatus in this application. The communication apparatus 700 may correspondingly implement a function or a step implemented by the terminal device or the network device in the foregoing method embodiments. The communication apparatus may include a transceiver module 701 and a processing module 702. Optionally, a storage module may further be included. The storage module may be configured to store instructions (code or a program) and/or data. The processing module 702 may be coupled to the storage module. For example, the processing module 702 may read the instructions (the code or the program) and/or the data in the storage module, to implement a corresponding method. The foregoing modules may be independently disposed, or may be partially or completely integrated.

It should be understood that, the processing module 702 may be a processor or a controller, for example, may be a general-purpose central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination including one or more microprocessors, or a combination of a DSP and a microprocessor. The transceiver module 701 is an interface circuit of the apparatus, and is configured to receive a signal from another apparatus. For example, when the apparatus is implemented in a form of a chip, the transceiver module 701 is an interface circuit used by the chip to receive a signal from another chip or apparatus, or is an interface circuit used by the chip to send a signal to another chip or apparatus.

The communication apparatus 700 may be the network device or the terminal device in the foregoing embodiments, or may be a chip configured to implement a function of the network device or the terminal device in the foregoing embodiments. For example, when the communication apparatus 700 is the network device or the terminal device, the processing module 702 may be, for example, a processor, and the transceiver module 701 may be, for example, a transceiver. Optionally, the transceiver may include a radio frequency circuit, and the storage unit may be, for example, a storage. For example, when the communication apparatus 700 is the chip configured to implement the function of the network device or the terminal device, the processing module 702 may be, for example, a processor, and the transceiver module 701 may be, for example, an input/output interface, a pin, or a circuit. The processing module 702 may execute computer-executable instructions stored in the storage unit. Optionally, the storage unit is a storage unit in the chip, for example, a register or a cache. Alternatively, the storage unit may be a storage unit that is in the network device, the terminal device, or a location management device and that is located outside the chip, for example, a read-only memory (read-only memory, ROM), another type of static storage device that can store static information and instructions, or a random access memory (random access memory, RAM).

In some possible implementations, the communication apparatus 700 can correspondingly implement a behavior and a function of the terminal device in the foregoing method embodiments. For example, the communication apparatus 700 may be a terminal device, or may be a component (for example, a chip or a circuit) used in the terminal device. The transceiver module 701 may be configured to support communication between the terminal device and another network entity, for example, support communication between the terminal device and the network device shown in FIG. 3, or communication between the terminal device and a location management device. The processing module 702 is configured to control and manage an action of the terminal device. For example, the processing module 702 is configured to support the terminal device in performing all operations, other than receiving and sending operations, of the terminal device in FIG. 3.

For another example, the transceiver module 701 may be configured to perform all receiving or sending operations performed by the terminal device in the embodiment shown in FIG. 3, for example, S301, S302, and S303 in the embodiment shown in FIG. 3, and/or configured to support another process of the technology described in this specification. The processing module 702 is configured to perform all operations, other than the receiving and sending operations, performed by the terminal device in the embodiment shown in FIG. 3, and/or configured to support another process of the technology described in this specification.

In some embodiments, the transceiver module 701 is configured to receive first information, where the first information indicates configuration information of a physical downlink control channel PDCCH.

When a condition is satisfied, the transceiver module 701 is configured to monitor the PDCCH on a first PDCCH transmission resource based on the first information, where the first PDCCH transmission resource includes a second PDCCH transmission resource used for enhancing the PDCCH, and enhancing the PDCCH includes repeating transmission of the PDCCH and/or increasing an PDCCH aggregation level.

In a possible implementation, that the condition is satisfied includes: at least one of the following conditions is satisfied:
the transceiver module 701 receives second information, where the second information indicates to enhance the PDCCH;
a corresponding frequency band for receiving the first information by the transceiver module 701 is a non-terrestrial network frequency band; and
the transceiver module 701 sends third information, where the third information indicates to enhance the PDCCH.

In a possible implementation, the PDCCH is used for scheduling a system information block SIB1. The processing module 702 is configured to: when the condition is satisfied, determine the first PDCCH transmission resource based on the first information, where the second PDCCH transmission resource is a resource configured based on a control resource set CORESETO, and/or the second PDCCH transmission resource is a resource configured based on a Type0-PDCCH common search space set.

In a possible implementation, the first information indicates that a synchronization signal block SSB/CORESET multiplexing pattern is 1, the first PDCCH transmission resource includes a third PDCCH transmission resource, the third PDCCH transmission resource corresponds to a first Type0-PDCCH monitoring occasion, the second PDCCH transmission resource corresponds to a second Type0-PDCCH monitoring occasion, and the first Type0-PDCCH monitoring occasion is associated with the second Type0-PDCCH monitoring occasion; and a first slot includes the first Type0-PDCCH monitoring occasion, a second slot includes the second Type0-PDCCH monitoring occasion, and the first slot and the second slot belong to a same radio frame, or the first slot and the second slot respectively belong to two adjacent radio frames; or the first Type0-PDCCH monitoring occasion and the second Type0-PDCCH monitoring occasion are scheduled by different SSBs in repeated transmission.

In a possible implementation, the first PDCCH transmission resource includes a third PDCCH transmission resource associated with the second PDCCH transmission resource, the third PDCCH transmission resource is a resource configured based on a first Type0-PDCCH common search space set, the second PDCCH transmission resource is a resource configured based on a second Type0-PDCCH common search space set, and the first Type0-PDCCH common search space set and the second Type0-PDCCH common search space set are located in a same slot.

In a possible implementation, the first PDCCH transmission resource includes a third PDCCH transmission resource associated with the second PDCCH transmission resource, and the second PDCCH transmission resource and the third PDCCH transmission resource are resources configured based on the same CORESETO.

In a possible implementation, the first PDCCH transmission resource includes a third PDCCH transmission resource associated with the second PDCCH transmission resource, the second PDCCH transmission resource and the third PDCCH transmission resource are resources configured based on a same search space set, the third PDCCH transmission resource corresponds to a first PDCCH monitoring occasion, the second PDCCH transmission resource corresponds to a second PDCCH monitoring occasion, and the first PDCCH monitoring occasion and the second PDCCH monitoring occasion belong to a same slot.

In a possible implementation, the first PDCCH transmission resource includes a third PDCCH transmission resource associated with the second PDCCH transmission resource, and the second PDCCH transmission resource and the third PDCCH transmission resource are resources in a fourth PDCCH transmission resource that are configured based on a same CORESET and a same search space.

In a possible implementation, the search space set is a Type0/0A/0B/1/1A/2/2A/3 common search space set, or the search space set is a UE-specific search space set.

In a possible implementation, the first PDCCH transmission resource includes a third PDCCH transmission resource, the third PDCCH transmission resource is a resource configured based on a first CORESET and a first search space set, the second PDCCH transmission resource is a resource configured based on a second CORESET and a second search space set, the first CORESET is associated with the second CORESET, the first search space set is associated with the second search space set, and the first CORESET is different from the second CORESET.

In some possible implementations, the communication apparatus 700 can correspondingly implement a behavior and a function of the network device in the foregoing method embodiments. For example, the communication apparatus 700 may be a network device, or may be a component (for example, a chip or a circuit) used in the network device. The network device is, for example, an access network device, like a base station or a TRP. The transceiver module 701 may be configured to support communication between the network device and another network entity, for example, support communication between the network device and the terminal device shown in FIG. 3. The processing module 702 is configured to control and manage an action of the network device. For example, the processing module 702 is configured to support the network device in performing all operations, other than receiving and sending operations, in FIG. 3.

In some embodiments, the transceiver module 701 is configured to send first information, where the first information indicates configuration information of a physical downlink control channel PDCCH. When a condition is satisfied, the transceiver module 701 is configured to send the PDCCH on a first PDCCH transmission resource, where the first PDCCH transmission resource includes a second PDCCH transmission resource used for enhancing the PDCCH, and enhancing the PDCCH includes repeating transmission of the PDCCH and/or increasing a PDCCH aggregation level.

In some possible implementations, that the condition is satisfied includes: at least one of the following conditions is satisfied:
an elevation angle of a beam used for sending the first information is less than a preset angle;
the transceiver module 701 sends the first information in a non-terrestrial network frequency band; and
the transceiver module 701 receives third information, where the third information indicates to enhance the PDCCH.

In some possible implementations, the PDCCH is used for scheduling a system information block SIB1, and the second PDCCH transmission resource is a resource configured based on a control resource set CORESETO, and/or the second PDCCH transmission resource is a resource configured based on a Type0-PDCCH common search space set.

In some possible implementations, the first information indicates that a synchronization signal block SSB/CORESET multiplexing pattern is 1, the first PDCCH transmission resource includes a third PDCCH transmission resource, the third PDCCH transmission resource corresponds to a first Type0-PDCCH monitoring occasion, the second PDCCH transmission resource corresponds to a second Type0-PDCCH monitoring occasion, and the first Type0-PDCCH monitoring occasion is associated with the second Type0-PDCCH monitoring occasion; and a first slot includes the first Type0-PDCCH monitoring occasion, a second slot includes the second Type0-PDCCH monitoring occasion, and the first slot and the second slot belong to a same radio frame, or the first slot and the second slot respectively belong to two adjacent radio frames; or the first Type0-PDCCH monitoring occasion and the second Type0-PDCCH monitoring occasion are scheduled by different SSBs in repeated transmission.

In some possible implementations, the first PDCCH transmission resource includes a third PDCCH transmission resource associated with the second PDCCH transmission resource, the third PDCCH transmission resource is a resource configured based on a first Type0-PDCCH common search space set, the second PDCCH transmission resource is a resource configured based on a second Type0-PDCCH common search space set, and the first Type0-PDCCH common search space set and the second Type0-PDCCH common search space set are located in a same slot.

In some possible implementations, the first PDCCH transmission resource includes a third PDCCH transmission resource associated with the second PDCCH transmission resource, and the second PDCCH transmission resource and the third PDCCH transmission resource are resources configured based on the same CORESETO.

In some possible implementations, the first PDCCH transmission resource includes a third PDCCH transmission resource associated with the second PDCCH transmission resource, the second PDCCH transmission resource and the third PDCCH transmission resource are resources configured based on a same search space set, the third PDCCH transmission resource corresponds to a first PDCCH monitoring occasion, the second PDCCH transmission resource corresponds to a second PDCCH monitoring occasion, and the first PDCCH monitoring occasion and the second PDCCH monitoring occasion belong to a same slot.

In some possible implementations, the first PDCCH transmission resource includes a third PDCCH transmission resource associated with the second PDCCH transmission resource, and the second PDCCH transmission resource and the third PDCCH transmission resource are resources in a fourth PDCCH transmission resource that are configured based on a same CORESET and a same search space.

In some possible implementations, the search space set is a Type0/0A/0B/1/1A/2/2A/3 common search space set, or the search space set is a UE-specific search space set.

In some possible implementations, the first PDCCH transmission resource includes a third PDCCH transmission resource, the third PDCCH transmission resource is a resource configured based on a first CORESET and a first search space set, the second PDCCH transmission resource is a resource configured based on a second CORESET and a second search space set, the first CORESET is associated with the second CORESET, the first search space set is associated with the second search space set, and the first CORESET is different from the second CORESET.

It should be understood that the processing module 702 in this embodiment of this application may be implemented by using a processor or a processor-related circuit component, and the transceiver module 701 may be implemented by using a transceiver or a transceiver-related circuit component.

FIG. 8 is a diagram of a structure a communication apparatus according to this application. The communication apparatus 800 may be a network device, for example, a base station or a TRP, and can implement a function of the network device in the method provided in embodiments of this application; the communication apparatus 800 may be a terminal device, and can implement a function of the terminal device in the method provided in embodiments of this application; or the communication apparatus 800 may be an apparatus that can support a network device or a terminal device in implementing a corresponding function in the method provided in embodiments of this application; or the communication apparatus 800 may be a chip system. In embodiments of this application, the chip system may include a chip, or may include a chip and another discrete component.

The communication apparatus 800 includes at least one processor 820. The processor 820 may be a CPU, a microprocessor, an ASIC, or one or more integrated circuits configured to control program execution of the solutions in this application, and is configured to implement or support the communication apparatus 800 in implementing a function of the network device or the terminal device in the method provided in embodiments of this application. For details, refer to the detailed descriptions in the method example. Details are not described herein again.

The communication apparatus 800 may further include at least one memory 830, configured to store program instructions and/or data. The memory 830 is coupled to the processor 820. The coupling in embodiments of this application is indirect coupling or a communication connection between apparatuses, units, or modules, may be in an electrical form, a mechanical form, or another form, and is used for information exchange between the apparatuses, the units, or the modules. The processor 820 may operate in collaboration with the memory 830. The processor 820 may execute the program instructions and/or the data stored in the memory 830, to cause the communication apparatus 800 to implement a corresponding method. At least one of the at least one memory may be included in the processor 820.

The communication apparatus 800 may further include a communication interface 810, configured to communicate with another device or a communication network, for example, a RAN, a wireless local area network (wireless local area network, WLAN), or a wired access network, through any transceiver-type apparatus. The communication interface 810 is configured to communicate with another device through a transmission medium, so that an apparatus in the communication apparatus 800 may communicate with the another device. For example, when the communication apparatus 800 is a network device, the another device is a terminal device or a location management function; or when the communication apparatus 800 is a terminal device, the another device is a network device or a location management function. The processor 820 may send and receive data through the communication interface 810. The communication interface 810 may be specifically a transceiver.

A specific connection medium between the communication interface 810, the processor 820, and the memory 830 is not limited in this embodiment of this application. In this embodiment of this application, the memory 830, the processor 820, and the communication interface 810 are connected through a bus 840 in FIG. 8, where the bus is represented by a thick line in FIG. 8. A connection manner between other components is merely an example for description, and is not limited thereto. The bus may be classified into an address bus, a data bus, a control bus, and the like. For ease of representation, only one thick line is for representing the bus in FIG. 8, but this does not mean that there is only one bus or only one type of bus.

In this embodiment of this application, the processor 820 may be a general-purpose processor, a digital signal processor, an application-specific integrated circuit, a field programmable gate array or another programmable logic device, a discrete gate or a transistor logic device, or a discrete hardware component, and may implement or execute the methods, steps, and logical block diagrams disclosed in embodiments of this application. The general-purpose processor may be a microprocessor, any conventional processor, or the like. The steps of the method disclosed with reference to embodiments of this application may be directly performed by a hardware processor, or may be performed by using a combination of hardware in the processor and a software module.

The memory 830 may be a ROM, another type of static storage device that can store static information and instructions, a RAM, or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can be configured to carry or store expected program code in a form of instructions or a data structure and that can be accessed by a computer. However, the memory 830 is not limited thereto. The memory may independently exist and may be connected to the processor through a communication line. The memory may alternatively be integrated with the processor.

The memory 830 is configured to store computer-executable instructions for performing the solutions in this application, and the processor 820 controls execution. The processor 820 is configured to execute the computer-executable instruction stored in the memory 830, to implement the communication method provided in the foregoing embodiments of this application.

Optionally, the computer-executable instructions in this embodiment of this application may also be referred to as application program code. This is not specifically limited in this embodiment of this application.

It should be noted that the communication apparatus in the foregoing embodiment may be a terminal device, may be a circuit, or may be a chip used in the terminal device, or another combined device, component, or the like that has a function of the terminal device. When the communication apparatus is a terminal device, the transceiver module may be a transceiver and may include an antenna, a radio frequency circuit, and the like, and the processing module may be a processor, for example, a central processing unit (central processing unit, CPU). When the communication apparatus is a component that has the function of the terminal device, the transceiver module may be a radio frequency unit, and the processing module may be a processor. When the communication apparatus is a chip system, the communication apparatus may be a field programmable gate array (field programmable gate array, FPGA), an ASIC, a system on chip (system on chip, SoC), a CPU, a network processor (network processor, NP), a digital signal processing circuit (digital signal processor, DSP), a micro controller unit (micro controller unit, MCU), a programmable controller (programmable logic device, PLD), or another integrated chip. The processing module 702 may be a processor of the chip system. The transceiver module 701 or a communication interface may be an input/output interface or an interface circuit of the chip system. For example, the interface circuit may be a code/data read/write interface circuit. The interface circuit may be configured to: receive code instructions (where the code instructions are stored in a memory, and may be directly read from the memory, or may be read from the memory through another device), and transmit the code instructions to the processor. The processor may be configured to run the code instructions, to perform the method in the foregoing method embodiments. For another example, the interface circuit may alternatively be a signal transmission interface circuit between a communication processor and a transceiver machine.

For example, the communication apparatus in the foregoing embodiment may be a chip. The chip includes a logic circuit and an input/output interface, and may further include a memory. The input/output interface may be configured to receive code instructions (the code instructions are stored in the memory, and may be directly read from the memory, or may be read from the memory through another component), and transmit the code instructions to a logic circuit. The logic circuit may be configured to run the code instructions to perform the method in the foregoing method embodiments. Alternatively, the input/output interface may be a signal transmission interface circuit between the logic circuit and a transceiver machine.

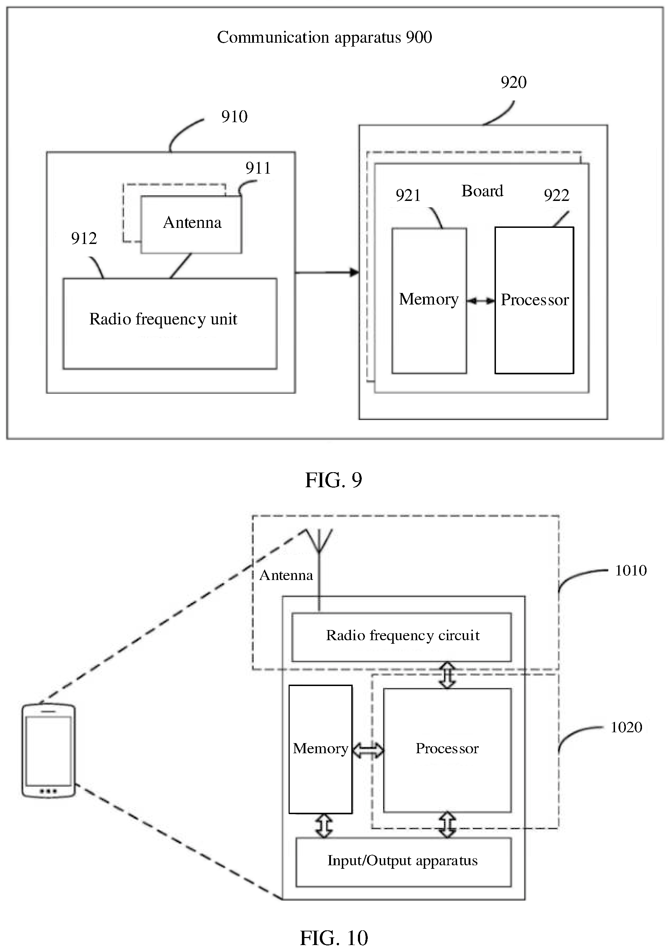

FIG. 9 is a simplified diagram of a structure of a communication apparatus. For ease of understanding and illustration, in FIG. 9, for example, the communication apparatus is a base station. The base station may be used in the system shown in FIG. 1 or FIG. 2, may be the network device in FIG. 1 or FIG. 2, and performs a function of the network device in the foregoing method embodiments.

The communication apparatus 900 may include a transceiver 910, a memory 921, and a processor 922. The transceiver 910 may be used by a communication apparatus for communication, for example, configured to send the broadcast message. The memory 921 is coupled to the processor 922, and may be configured to store a program and data that are necessary for implementing functions by the communication apparatus 900. The processor 922 is configured to support the communication apparatus 900 in performing the corresponding functions in the foregoing method. The functions may be implemented by invoking the program stored in the memory 921.

Specifically, the transceiver 910 may be a wireless transceiver, and may be configured to support the communication apparatus 900 in receiving and sending signaling and/or data through a radio air interface. The transceiver 910 may also be referred to as a transceiver unit or a communication unit. The transceiver 910 may include one or more radio frequency units 912 and one or more antennas 911. The radio frequency unit, for example, a remote radio unit (remote radio unit, RRU) or an active antenna unit (active antenna unit, AAU), may be specifically configured to: transmit a radio frequency signal, and perform conversion between the radio frequency signal and a baseband signal. The one or more antennas may be specifically configured to radiate and receive the radio frequency signal. Optionally, the transceiver 910 may include only the foregoing radio frequency unit. In this case, the communication apparatus 900 may include the transceiver 910, the memory 921, the processor 922, and the antenna.

The memory 921 and the processor 922 may be integrated together or may be independent of each other. As shown in FIG. 9, the memory 921 and the processor 922 may be integrated into a control unit 920 of the communication apparatus 900. For example, the control unit 920 may include a baseband unit (baseband unit, BBU) of an LTE base station, and the baseband unit may also be referred to as a digital unit (digital unit, DU); or the control unit 920 may include a distributed unit (distributed unit, DU) and/or a central unit (centralized unit, CU) in a base station in 5G or a future radio access technology. The control unit 920 may include one or more antenna panels. A plurality of antenna panels may jointly support a radio access network (for example, an LTE network) of a single access standard, or a plurality of antenna panels may separately support radio access networks (for example, an LTE network, a 5G network, and another network) of different access standards.

The memory 921 and the processor 922 may serve one or more antenna panels. In other words, the memory 921 and the processor 922 may be separately disposed on each antenna panel. Alternatively, the plurality of antenna panels may share a same memory 921 and a same processor 922. In addition, a necessary circuit may be disposed on each antenna panel. For example, the circuit may be configured to implement coupling between the memory 921 and the processor 922. The transceiver 910, the processor 922, and the memory 921 may be connected to each other through a bus (bus) structure and/or another connection medium.

Based on the structure shown in FIG. 9, when the communication apparatus 900 needs to send data, the processor 922 may perform baseband processing on the to-be-sent data and then output a baseband signal to the radio frequency unit, and the radio frequency unit performs radio frequency processing on the baseband signal and then sends a radio frequency signal in a form of an electromagnetic wave through the antenna. When data is sent to the communication apparatus 900, the radio frequency unit receives a radio frequency signal through the antenna, converts the radio frequency signal into a baseband signal, and outputs the baseband signal to the processor 922. The processor 922 converts the baseband signal into data, and processes the data.

Based on the structure shown in FIG. 9, the transceiver 910 may be configured to perform the foregoing steps performed by the transceiver module 701, and/or the processor 922 may be configured to invoke instructions in the memory 921, to perform the steps performed by the processing module 702.

FIG. 10 is a simplified diagram of a structure of a terminal device. For ease of understanding and convenience of figure illustration, an example in which the terminal device is a mobile phone is used in FIG. 10. As shown in FIG. 10, the terminal device includes a processor, a memory, a radio frequency circuit, an antenna, and an input/output apparatus. The processor is mainly configured to: process a communication protocol and communication data, control an on-board unit, execute a software program, process data of the software program, and the like. The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user. It should be noted that some types of devices may have no input/output apparatus.

When data needs to be sent, the processor performs baseband processing on the to-be-sent data and then outputs a baseband signal to the radio frequency circuit, and the radio frequency circuit performs radio frequency processing on the baseband signal and then sends a radio frequency signal to the outside in a form of an electromagnetic wave through the antenna. When data is sent to the device, the radio frequency circuit receives the radio frequency signal through the antenna, converts the radio frequency signal into the baseband signal, and outputs the baseband signal to the processor. The processor converts the baseband signal into data and processes the data. For ease of description, FIG. 10 shows only one memory and one processor. In an actual device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have a transceiver function may be considered as a transceiver unit of an apparatus, and the processor having a processing function may be considered as a processing unit of the apparatus. As shown in FIG. 10, the apparatus includes a transceiver unit 1010 and a processing unit 1020. The transceiver unit 1010 may also be referred to as a transceiver, a transceiver machine, a transceiver apparatus, or the like. The processing unit 1020 may also be referred to as a processor, a processing board, a processing module, a processing apparatus, or the like. Optionally, a component configured to implement the receiving function in the transceiver unit 1010 may be considered as a receiving unit, and a component configured to implement the sending function in the transceiver unit 1010 may be considered as a sending unit. That is, the transceiver unit 1010 includes the receiving unit and the sending unit. The transceiver unit 1010 sometimes may also be referred to as a transceiver machine, a transceiver, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

It should be understood that the transceiver unit 1010 is configured to perform a sending operation and a receiving operation on a terminal side in the foregoing method embodiments, and the processing unit 1020 is configured to perform an operation other than the receiving and sending operations of the terminal in the foregoing method embodiments.

When the communication apparatus is a chip-type apparatus or circuit, the apparatus may include a transceiver unit and a processing unit. The transceiver unit may be an input/output circuit and/or a communication interface. The processing unit is an integrated processor, a microprocessor, or an integrated circuit.

An embodiment of this application further provides a computer-readable storage medium, including instructions. When the instructions are run on a computer, the computer is caused to perform the method performed by the network device or the terminal device in FIG. 3, or perform the method performed by the location management device.

An embodiment of this application further provides a computer program product, including instructions. When the computer program product runs on a computer, the computer is caused to perform the method performed by the network device or the terminal device in FIG. 3, or perform the method performed by the location management device.

An embodiment of this application provides a chip system. The chip system includes a processor, may further include a memory, and is configured to implement the function of the network device or the terminal device in the foregoing methods. The chip system may include a chip, or may include a chip and another discrete component.

All or some of the methods in embodiments of this application may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments are all or partially generated. The computer may be a general-purpose computer, a dedicated computer, a computer network, a network device, a user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD for short)), a semiconductor medium (for example, an SSD), or the like.

It is clear that a person skilled in the art can make various modifications and variations to this application without departing from the scope of this application. This application is intended to cover these modifications and variations of this application provided that they fall within the scope of the claims of this application and their equivalent technologies.

## Claims

1. A communication method, wherein the method comprises:
receiving first information, wherein the first information indicates configuration information of a physical downlink control channel PDCCH; and
when a condition is satisfied, monitoring the PDCCH on a first PDCCH transmission resource based on the first information, wherein the first PDCCH transmission resource comprises a second PDCCH transmission resource used for enhancing the PDCCH, and enhancing the PDCCH comprises repeating transmission of the PDCCH and/or increasing an PDCCH aggregation level.

2. The method according to claim 1, wherein that the condition is satisfied comprises: at least one of the following conditions is satisfied:
second information is received, wherein the second information indicates to enhance the PDCCH;
a corresponding frequency band for receiving the first information is a non-terrestrial network frequency band; and
third information is sent, wherein the third information indicates to enhance the PDCCH.

3. The method according to claim 1 or 2, wherein the PDCCH is used for scheduling a system information block SIB1, and the method further comprises:
when the condition is satisfied, determining the first PDCCH transmission resource based on the first information, wherein the second PDCCH transmission resource is a resource configured based on a control resource set CORESETO, and/or the second PDCCH transmission resource is a resource configured based on a Type0-PDCCH common search space set.

4. The method according to claim 3, wherein the first information indicates that a synchronization signal block SSB/CORESET multiplexing pattern is 1, the first PDCCH transmission resource comprises a third PDCCH transmission resource, the third PDCCH transmission resource corresponds to a first Type0-PDCCH monitoring occasion, the second PDCCH transmission resource corresponds to a second Type0-PDCCH monitoring occasion, and the first Type0-PDCCH monitoring occasion is associated with the second Type0-PDCCH monitoring occasion; and
a first slot comprises the first Type0-PDCCH monitoring occasion, a second slot comprises the second Type0-PDCCH monitoring occasion, and the first slot and the second slot belong to a same radio frame, or the first slot and the second slot respectively belong to two adjacent radio frames; or
the first Type0-PDCCH monitoring occasion and the second Type0-PDCCH monitoring occasion are scheduled by different SSBs in repeated transmission.

5. The method according to claim 3, wherein the first PDCCH transmission resource comprises a third PDCCH transmission resource associated with the second PDCCH transmission resource, the third PDCCH transmission resource is a resource configured based on a first Type0-PDCCH common search space set, the second PDCCH transmission resource is a resource configured based on a second Type0-PDCCH common search space set, and the first Type0-PDCCH common search space set and the second Type0-PDCCH common search space set are located in a same slot.

6. The method according to claim 3, wherein the first PDCCH transmission resource comprises a third PDCCH transmission resource associated with the second PDCCH transmission resource, and the second PDCCH transmission resource and the third PDCCH transmission resource are resources configured based on a same CORESETO.

7. The method according to claim 1 or 2, wherein the first PDCCH transmission resource comprises a third PDCCH transmission resource associated with the second PDCCH transmission resource, the second PDCCH transmission resource and the third PDCCH transmission resource are resources configured based on a same search space set, the third PDCCH transmission resource corresponds to a first PDCCH monitoring occasion, the second PDCCH transmission resource corresponds to a second PDCCH monitoring occasion, and the first PDCCH monitoring occasion and the second PDCCH monitoring occasion belong to a same slot.

8. The method according to claim 1 or 2, wherein the first PDCCH transmission resource comprises a third PDCCH transmission resource associated with the second PDCCH transmission resource, and the second PDCCH transmission resource and the third PDCCH transmission resource are resources in a PDCCH transmission resource that are configured based on a same CORESET and a same search space.

9. The method according to claim 8, wherein the search space set is a Type0/0A/0B/1/1A/2/2A/3 common search space set, or the search space set is a user equipment-specific search space set.

10. The method according to claim 1 or 2, wherein the first PDCCH transmission resource comprises a third PDCCH transmission resource, the third PDCCH transmission resource is a resource configured based on a first CORESET and a first search space set, the second PDCCH transmission resource is a resource configured based on a second CORESET and a second search space set, the first CORESET is associated with the second CORESET, the first search space set is associated with the second search space set, and the first CORESET is different from the second CORESET.

11. The method according to any one of claims 1 to 10, wherein the method further comprises:
associating the second PDCCH transmission resource with the third PDCCH transmission resource in the first PDCCH transmission resource; and
monitoring repetitions of the transmitted PDCCH on the second PDCCH transmission resource and the third PDCCH transmission resource, and/or perform PDCCH blind detection on the first PDCCH transmission resource at an aggregation level.

12. A communication method, wherein the method comprises:
sending first information, wherein the first information indicates configuration information of a physical downlink control channel PDCCH; and
when a condition is satisfied, sending the PDCCH on a first PDCCH transmission resource, wherein the first PDCCH transmission resource comprises a second PDCCH transmission resource used for enhancing the PDCCH, and enhancing the PDCCH comprises repeating transmission of the PDCCH and/or increasing an PDCCH aggregation level.

13. The method according to claim 12, wherein that the condition is satisfied comprises: at least one of the following conditions is satisfied:
an elevation angle of a beam used for sending the first information is less than a preset angle;
the first information is sent in a non-terrestrial network frequency band; and
third information is received, wherein the third information indicates to enhance the PDCCH.

14. The method according to claim 12 or 13, wherein the PDCCH is used for scheduling a system information block SIB1, and the second PDCCH transmission resource is a resource configured based on a control resource set CORESETO, and/or the second PDCCH transmission resource is a resource configured based on a Type0-PDCCH common search space set.

15. The method according to claim 14, wherein the first information indicates that a synchronization signal block SSB/CORESET multiplexing pattern is 1, the first PDCCH transmission resource comprises a third PDCCH transmission resource, the third PDCCH transmission resource corresponds to a first Type0-PDCCH monitoring occasion, the second PDCCH transmission resource corresponds to a second Type0-PDCCH monitoring occasion, and the first Type0-PDCCH monitoring occasion is associated with the second Type0-PDCCH monitoring occasion; and
a first slot comprises the first Type0-PDCCH monitoring occasion, a second slot comprises the second Type0-PDCCH monitoring occasion, and the first slot and the second slot belong to a same radio frame, or the first slot and the second slot respectively belong to two adjacent radio frames; or
the first Type0-PDCCH monitoring occasion and the second Type0-PDCCH monitoring occasion are scheduled by different SSBs in repeated transmission.

16. The method according to claim 14, wherein the first PDCCH transmission resource comprises a third PDCCH transmission resource associated with the second PDCCH transmission resource, the third PDCCH transmission resource is a resource configured based on a first Type0-PDCCH common search space set, the second PDCCH transmission resource is a resource configured based on a second Type0-PDCCH common search space set, and the first Type0-PDCCH common search space set and the second Type0-PDCCH common search space set are located in a same slot.

17. The method according to claim 14, wherein the first PDCCH transmission resource comprises a third PDCCH transmission resource associated with the second PDCCH transmission resource, and the second PDCCH transmission resource and the third PDCCH transmission resource are resources configured based on a same CORESETO.

18. The method according to claim 12 or 13, wherein the first PDCCH transmission resource comprises a third PDCCH transmission resource associated with the second PDCCH transmission resource, the second PDCCH transmission resource and the third PDCCH transmission resource are resources configured based on a same search space set, the third PDCCH transmission resource corresponds to a first PDCCH monitoring occasion, the second PDCCH transmission resource corresponds to a second PDCCH monitoring occasion, and the first PDCCH monitoring occasion and the second PDCCH monitoring occasion belong to a same slot.

19. The method according to claim 12 or 13, wherein the first PDCCH transmission resource comprises a third PDCCH transmission resource associated with the second PDCCH transmission resource, and the second PDCCH transmission resource and the third PDCCH transmission resource are resources in a PDCCH transmission resource that are configured based on a same CORESET and a same search space.

20. The method according to claim 19, wherein the search space set is a Type0/0A/0B/1/1A/2/2A/3 common search space set, or the search space set is a user equipment-specific search space set.

21. The method according to claim 12 or 13, wherein the first PDCCH transmission resource comprises a third PDCCH transmission resource, the third PDCCH transmission resource is a resource configured based on a first CORESET and a first search space set, the second PDCCH transmission resource is a resource configured based on a second CORESET and a second search space set, the first CORESET is associated with the second CORESET, the first search space set is associated with the second search space set, and the first CORESET is different from the second CORESET.

22. A communication apparatus, comprising a module configured to perform the method according to any one of claims 1 to 11 or comprising a module configured to perform the method according to any one of claims 12 to 21.

23. A communication apparatus, comprising at least one processor, wherein the at least one processor is configured to perform the method according to any one of claims 1 to 11, or the at least one processor is configured to perform the method according to any one of claims 12 to 21.

24. A chip system, wherein the chip system comprises a processor, and the processor is configured to perform the method according to any one of claims 1 to 11, or the processor is configured to perform the method according to any one of claims 12 to 21.

25. A communication system, wherein the communication system comprises a communication apparatus configured to perform the method according to any one of claims 1 to 11 and a communication apparatus configured to perform the method according to any one of claims 12 to 21.

26. A readable storage medium, wherein the storage medium stores a computer program or instructions; and when the computer program or the instructions are executed by a communication apparatus, the method according to any one of claims 1 to 11 is implemented; or when the computer program or the instructions are executed by a communication apparatus, the method according to any one of claims 12 to 21 is implemented.

27. A computer program product, wherein the computer program product comprises computer program code; and when the computer program code is run, the method according to any one of claims 1 to **11** is performed; or when the computer program code is run, the method according to any one of claims 12 to 21 is performed.
